# EUROPEAN PATENT APPLICATION

(11) **EP 4 501 432 A1**
(43) Date of publication of application: **05.02.2025**
(21) Application number: 22935670.4
(22) Date of filing: 01.12.2022
(51) Int. Cl.: B01D 53/047, B01D 53/62, B01D 53/82

(54) **CARBON DIOXIDE RECOVERY FACILITY AND CARBON DIOXIDE RECOVERY METHOD**

(30) Priority: 29.03.2022 JP 2022052723
(71) Applicant: Mitsubishi Heavy Industries, Ltd., Tokyo 100-8332 (JP)
(72) Inventor: TOMONAGA Nariyuki, Tokyo 100-8332 (JP); ITO Yoshiaki, Tokyo 100-8332 (JP); ANKEI Naoki, Tokyo 100-8332 (JP)
(74) Representative: Studio Torta S.p.A.
(86) International application number: PCT/JP2022/044382
(87) International publication number: WO 2023/188541

(57) **Abstract**

A carbon dioxide recovery facility includes: an adsorption tower which is filled with a carbon dioxide adsorbing material; a suction machine which vacuum-suctions the inside of the adsorption tower; a discharge line which is connected to a discharge port of the suction machine; a carbon dioxide recovery line which is connected to the discharge line; a recovery gas valve which is provided in the carbon dioxide recovery line; a non-recovery gas line which is connected to the discharge line; a non-recovery gas valve which is provided in the non-recovery gas line; and a control device. The control device closes the recovery gas valve and opens the non-recovery gas valve when the pressure in the adsorption tower is a low vacuum based on a predetermined recovery pressure and closes the non-recovery gas valve and opens the recovery gas valve when the pressure in the adsorption tower is a high vacuum based on the recovery pressure.

## Description

### TECHNICAL FIELD

The present disclosure relates to a carbon dioxide recovery facility and a carbon dioxide recovery method.

### BACKGROUND ART

From the viewpoint of protecting the global environment, facilities that recover carbon dioxide contained in an exhaust gas are being considered in order to reduce carbon dioxide emissions.

Priority is claimed on Japanese Patent Application No. 2022-052723, filed March 29, 2022, the content of which is incorporated herein by reference.

As a facility that recovers carbon dioxide from an exhaust gas, for example, a facility disclosed in Non-Patent Document 1 below is known. This facility includes a blowing machine, a dehumidifier, a first-stage adsorption tower, a first suction machine, a second-stage adsorption tower, and a second suction machine. The blowing machine sends an exhaust gas to a dehumidification tower. The dehumidification tower removes moisture in an exhaust gas. The first-stage adsorption tower and the second-stage adsorption tower are filled with an adsorbent capable of adsorbing carbon dioxide. The first-stage adsorption tower adsorbs carbon dioxide in an exhaust gas having passed through the dehumidifier. The first suction machine vacuum-suctions the inside of the first-stage adsorption tower, releases carbon dioxide from the adsorbent in the first-stage adsorption tower, and sends a gas containing carbon dioxide to the second-stage adsorption tower. The second-stage adsorption tower adsorbs the carbon dioxide in the gas from the first-stage adsorption tower through the first suction machine. The second suction machine vacuum-suctions the inside of the second-stage adsorption tower, releases the carbon dioxide from the adsorbent in the second-stage adsorption tower, and sends a gas containing carbon dioxide to a tank. Furthermore, in order to continuously treat the exhaust gas, it is necessary to have a plurality of first-stage adsorption towers and a plurality of second-stage adsorption towers.

In this facility, since the carbon dioxide is adsorbed in two stages, high-concentration carbon dioxide can be recovered.

### Citation List

### Patent Document

Non-Patent Document 1 "Mitsubishi Heavy Industries Technical Review Vol. 35 No. 6 (1998-11)", Mitsubishi Heavy Industries, Ltd., November 1998, pp. 406-409

### SUMMARY OF INVENTION

### Technical Problem

The facility described in Non-Patent Document 1 includes the first-stage adsorption tower, the first suction machine, the second-stage adsorption tower, and the second suction machine in order to recover high-concentration carbon dioxide. Therefore, in the facility described in Non-Patent Document 1, the number of devices constituting the facility increases, the installation area for the facility increases, and the facility cost increases.

Therefore, an object of the present disclosure is to provide a carbon dioxide recovery facility and a carbon dioxide recovery method capable of suppressing an increase in installation area for the facility and facility cost while recovering high-concentration carbon dioxide from an exhaust gas.

### Solution to Problem

A carbon dioxide recovery facility according to an aspect of the present disclosure for achieving the above-described object is a carbon dioxide recovery facility capable of recovering carbon dioxide from an exhaust gas containing at least nitrogen and carbon dioxide, including: an adsorption tower which is filled with a carbon dioxide adsorbing material made of a carbon dioxide adsorbent capable of adsorbing carbon dioxide under high pressure and discharging carbon dioxide under lower pressure; a blowing machine which sends the exhaust gas into the adsorption tower; a suction machine which vacuum-suctions the inside of the adsorption tower; a discharge line which is connected to a discharge port of the suction machine; a carbon dioxide recovery line which is connected to the discharge line; a recovery gas valve which is provided in the carbon dioxide recovery line; a non-recovery gas line which is connected to the discharge line; a non-recovery gas valve which is provided in the non-recovery gas line; and a control device which closes the recovery gas valve and opens the non-recovery gas valve when the pressure in the adsorption tower is a low vacuum based on a predetermined recovery pressure or is assumed to be a low vacuum and closes the non-recovery gas valve and opens the recovery gas valve when the pressure in the adsorption tower is a high vacuum based on the recovery pressure or is assumed to be a high vacuum.

The inventor vacuum-suctioned the inside of the adsorption tower and analyzed the gas components in the suction gas according to the pressure in the adsorption tower at that time. Through this analysis, the inventor discovered the following phenomenon. When the vacuum degree in the adsorption tower is low, the nitrogen concentration in the suction gas is high and the carbon dioxide concentration in the suction gas is low. When the vacuum degree in the adsorption tower is increased, the nitrogen concentration in the suction gas gradually decreases and the carbon dioxide concentration in the suction gas gradually increases. This phenomenon is believed to be due to the fact that the adsorption force of carbon dioxide to the carbon dioxide adsorbing material is higher than the adsorption force of nitrogen to the carbon dioxide adsorbing material.

Based on the above phenomenon, the inventor has conceived of the carbon dioxide capture equipment in the first aspect. In this aspect, when the pressure in the adsorption tower is a low vacuum based on a predetermined recovery pressure or is assumed to be a low vacuum, the suction gas is not recovered in a tank or the like, and when the pressure in the adsorption tower is a high vacuum based on the recovery pressure or is assumed to be a high vacuum, the suction gas is recovered in a tank or the like. Therefore, in this aspect, high-concentration carbon dioxide can be recovered.

Further, in this aspect, since it is possible to recover high-concentration carbon dioxide as described above without providing the first-stage adsorption tower and the second-stage adsorption tower as in the facility described in Non-Patent Document 1, the number of devices that constitute the facility can be reduced. Thus, in this aspect, it is possible to suppress an increase in installation area for the facility and facility cost.

Further, in this aspect, since high-concentration carbon dioxide can be recovered without executing the adsorption step in two stages, it is possible to shorten the time required to recover carbon dioxide from the exhaust gas.

A carbon dioxide recovery method according to an aspect of the present disclosure for achieving the above-described object is a carbon dioxide recovery method of recovering carbon dioxide from an exhaust gas containing at least nitrogen and carbon dioxide, executing: an adsorption step of flowing the exhaust gas into an adsorption tower, filled with a carbon dioxide adsorbing material made of a carbon dioxide adsorbent capable of adsorbing carbon dioxide under high pressure and discharging carbon dioxide under low pressure, so that the carbon dioxide in the exhaust gas is adsorbed by the carbon dioxide adsorbent; and a release step of vacuum-suctioning the inside of the adsorption tower so that the carbon dioxide adsorbed by the carbon dioxide adsorbent is released from the carbon dioxide adsorbent, wherein the release step includes a carbon dioxide recovery step of guiding a gas from the adsorption tower to a recovery gas tank as a recovery gas, a non-recovery gas circulation step of guiding a gas from the adsorption tower to a location other than the recovery gas tank as a non-recovery gas, and a control step of controlling the execution of the carbon dioxide recovery step and the non-recovery gas circulation step, and wherein in the control step, when the pressure in the adsorption tower is a high vacuum based on a predetermined recovery pressure or is assumed to be a high vacuum, the carbon dioxide recovery step is executed, and when the pressure in the adsorption tower is a low vacuum based on the recovery pressure or is assumed to be a low vacuum, the non-recovery gas circulation step is executed.

In this aspect, the same effect as that of the carbon dioxide recovery facility of the first aspect can be obtained. That is, even in this aspect, high-concentration carbon dioxide can be recovered without providing the first-stage adsorption tower and the second-stage adsorption tower as in the facility described in Non-Patent Document 1. Further, even in this aspect, it is possible to shorten the time required to recover carbon dioxide from the exhaust gas.

### Advantageous Effects of Invention

According to an aspect of the present disclosure, it is possible to suppress an increase in installation area for the facility and facility cost while recovering high-concentration carbon dioxide from an exhaust gas.

### BRIEF DESCRIPTION OF DRAWINGS

[FIG. 1] is a (first) system diagram of a carbon dioxide recovery facility according to a first embodiment of the present disclosure.
[FIG. 2] is a (second) system diagram of the carbon dioxide recovery facility according to the first embodiment of the present disclosure.
[FIG. 3] is a perspective view of a main part of a carbon dioxide adsorbing material according to the first embodiment of the present disclosure.
[FIG. 4] is a flowchart showing an operation of the carbon dioxide recovery facility according to the first embodiment of the present disclosure.
[FIG. 5] is an explanatory diagram showing an analysis result when NaX type zeolite is used.
[FIG. 6] is an explanatory diagram showing an analysis result when LiX type zeolite is used.
[FIG. 7] is an explanatory diagram showing an analysis result when CaX type zeolite is used.
[FIG. 8] is a graph showing a change over time in gauge pressure in an adsorption tower according to the first embodiment of the present disclosure.
[FIG. 9] is a system diagram of a carbon dioxide recovery facility according to a second embodiment of the present disclosure.
[FIG. 10] is a flowchart showing an operation of the carbon dioxide recovery facility according to the second embodiment of the present disclosure.
[FIG. 11] is a system diagram of a carbon dioxide recovery facility according to a third embodiment of the present disclosure.
[FIG. 12] is a flowchart showing an operation of the carbon dioxide recovery facility according to the third embodiment of the present disclosure.
[FIG. 13] is a graph showing a change over time in gauge pressure in an adsorption tower according to the third embodiment of the present disclosure.
[FIG. 14] is a system diagram of a carbon dioxide recovery facility according to a fourth embodiment of the present disclosure.
[FIG. 15] is an explanatory diagram showing a configuration of a suction machine according to an aspect of the fourth embodiment of the present disclosure.
[FIG. 16] is an explanatory diagram showing a configuration of a suction machine according to another aspect of the fourth embodiment of the present disclosure.
[FIG. 17] is a flowchart showing an operation of the carbon dioxide recovery facility according to the fourth embodiment of the present disclosure.
[FIG. 18] is a graph showing a change over time in gauge pressure in an adsorption tower according to the fourth embodiment of the present disclosure.
[FIG. 19] is a system diagram of a carbon dioxide recovery facility according to a fifth embodiment of the present disclosure.
[FIG. 20] is a flowchart showing an operation of the carbon dioxide recovery facility according to the fifth embodiment of the present disclosure.
[FIG. 21] is a graph showing a change over time in gauge pressure in an adsorption tower according to the fifth embodiment of the present disclosure.

### DESCRIPTION OF EMBODIMENTS

Various embodiments and modified examples of a carbon dioxide recovery facility according to the present disclosure will be described below with reference to the drawings.

### "First embodiment"

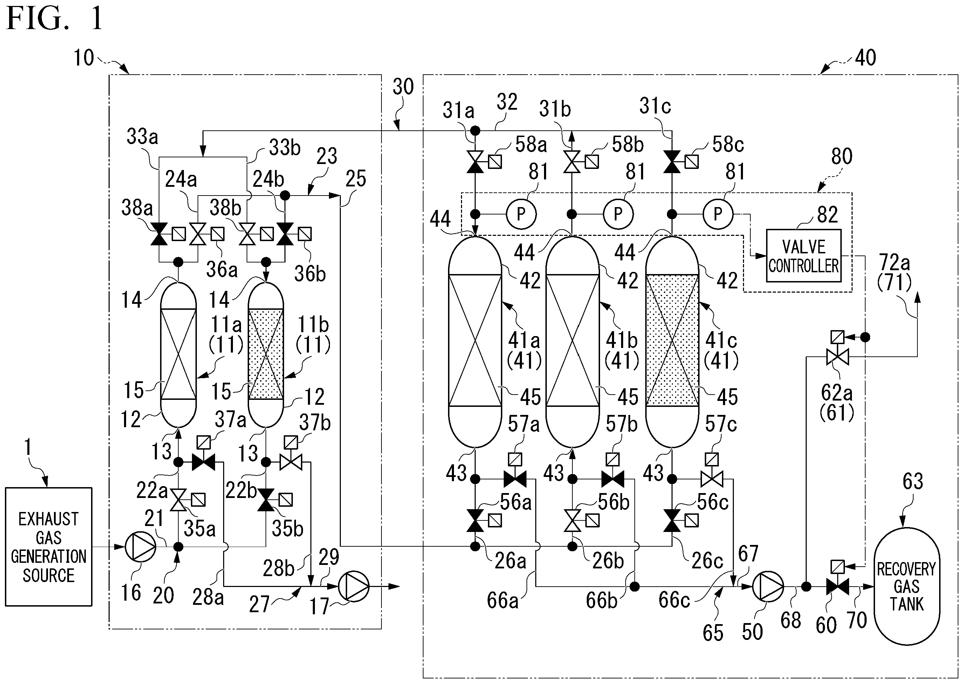

A first embodiment of the carbon dioxide recovery facility will be described with reference to FIGS. 1 to 8.

As shown in FIG. 1, the carbon dioxide recovery facility of this embodiment is a facility that recovers carbon dioxide in an exhaust gas from an exhaust gas generation source 1. The exhaust gas generation source 1 may be, for example, an incinerator, a boiler, a gas turbine, and the like. The composition of the exhaust gas from the exhaust gas generation source 1 is, for example, as follows.
N₂: 75.9 vol%, O₂: 9.6 vol%, CO₂: 5.4 vol%, H₂O: 9.2 vol%

The carbon dioxide recovery facility includes a pretreatment device 10 and a carbon dioxide recovery device 40. The pretreatment device 10 is a device for removing components from the exhaust gas that inhibit the carbon dioxide recovery in the carbon dioxide recovery device 40. The carbon dioxide recovery device 40 is a device that mainly recovers carbon dioxide in the exhaust gas from the pretreatment device 10.

The pretreatment device 10 includes two dehumidification towers 11. Each of the two dehumidification towers 11 includes a container 12 and a moisture adsorbing material 15 filled in the container 12. The moisture adsorbing material 15 is made of a moisture adsorbent capable of adsorbing moisture. Examples of moisture adsorbents include activated alumina, silica gel, and zeolite. Each of the containers 12 of the two dehumidification towers 11 includes a first port 13 and a second port 14. The first port 13 is formed on one side of the container 12 based on the moisture adsorbing material 15, and the second port 14 is formed on the other side of the container 12 based on the moisture adsorbing material 15. Hereinafter, in the two dehumidification towers 11, one dehumidification tower 11 will be referred to as a first dehumidification tower 11a, and the remaining dehumidification tower 11 will be referred to as a second dehumidification tower 11b.

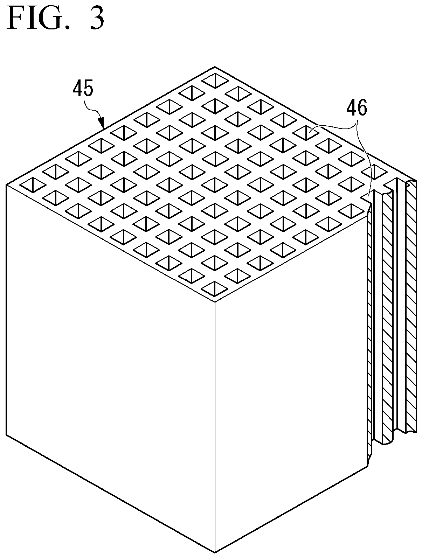

The carbon dioxide recovery device 40 includes three adsorption towers 41. Each of the three adsorption towers 41 includes a container 42 and a carbon dioxide adsorbing material 45 filled in the container 42. The carbon dioxide adsorbing material 45 is formed of a carbon dioxide adsorbent capable of adsorbing carbon dioxide under high pressure and releasing carbon dioxide under low pressure. The carbon dioxide adsorbent in this embodiment is zeolite. Each of the containers 42 of the three adsorption towers 41 includes a first port 43 and a second port 44. The first port 43 is formed on one side of the container 42 based on the carbon dioxide adsorbing material 45, and the second port 44 is formed on the other side of the container 42 based on the carbon dioxide adsorbing material 45. Hereinafter, in the three adsorption towers 41, one adsorption tower 41 will be referred to as a first adsorption tower 41a, another adsorption tower 41 will be described as a second adsorption tower 41b, and the remaining adsorption tower 41 will be referred to as a third adsorption tower 41c. As shown in FIG. 3, the carbon dioxide adsorbing material 45 is a porous structure having a plurality of through holes 46 penetrating in the same direction. Furthermore, the porous structure shown in FIG. 3 is sometimes called a honeycomb structure.

Zeolite which is a type of carbon dioxide adsorbent can adsorb not only carbon dioxide but also water. Therefore, if moisture is contained in the exhaust gas, the ability of zeolite to adsorb carbon dioxide decreases. Therefore, in this embodiment, the pretreatment device 10 removes moisture in the exhaust gas.

The pretreatment device 10 includes a blowing machine 16, a dehumidification vacuum pump 17, an exhaust gas line 20, a dry exhaust gas line 23, a moisture-rich gas line 27, an off-gas line 30, a first exhaust gas valve 35a, a second exhaust gas valve 35b, a dehumidification side first dry exhaust gas valve 36a, a dehumidification side second dry exhaust gas valve 36b, a first moisture-rich gas valve 37a, a second moisture-rich gas valve 37b, a dehumidification side first off-gas valve 38a, and a dehumidification side second off-gas valve 38b in addition to the first dehumidification tower 11a and the second dehumidification tower 11b described above.

The exhaust gas line 20 includes a main exhaust gas line 21, a first exhaust gas line 22a, and a second exhaust gas line 22b. One end of the main exhaust gas line 21 is connected to the exhaust gas generation source 1. One end of the first exhaust gas line 22a and one end of the second exhaust gas line 22b are connected to the other end of the main exhaust gas line 21. Thus, the first exhaust gas line 22a and the second exhaust gas line 22b are lines branched from the main exhaust gas line 21. The main exhaust gas line 21 is provided with the blowing machine 16. The other end of the first exhaust gas line 22a is connected to the first port 13 of the first dehumidification tower 11a, and the other end of the second exhaust gas line 22b is connected to the first port 13 of the second dehumidification tower 11b. The first exhaust gas line 22a is provided with the first exhaust gas valve 35a. The second exhaust gas line 22b is provided with the second exhaust gas valve 35b.

The dry exhaust gas line 23 includes a dehumidification side first dry exhaust gas line 24a, a dehumidification side second dry exhaust gas line 24b, a main dry exhaust gas line 25, a recovery side first dry exhaust gas line 26a, a recovery side second dry exhaust gas line 26b, and a recovery side third dry exhaust gas line 26c. One end of the dehumidification side first dry exhaust gas line 24a is connected to the second port 14 of the first dehumidification tower 11a, and one end of the dehumidification side second dry exhaust gas line 24b is connected to the second port 14 of the second dehumidification tower 11b. The dehumidification side first dry exhaust gas line 24a is provided with the dehumidification side first dry exhaust gas valve 36a. The dehumidification side second dry exhaust gas line 24b is provided with the dehumidification side second dry exhaust gas valve 36b. One end of the main dry exhaust gas line 25 is connected to the other end of the dehumidification side first dry exhaust gas line 24a and the other end of the dehumidification side second dry exhaust gas line 24b. One end of the recovery side first dry exhaust gas line 26a, one end of the recovery side second dry exhaust gas line 26b, and one end of the recovery side third dry exhaust gas line 26c are connected to the other end of the main dry exhaust gas line 25. Thus, the recovery side first dry exhaust gas line 26a, the recovery side second dry exhaust gas line 26b, and the recovery side third dry exhaust gas line 26c are lines branched from the main dry exhaust gas line 25. The other end of the recovery side first dry exhaust gas line 26a is connected to the first port 43 of the first adsorption tower 41a. The other end of the recovery side second dry exhaust gas line 26b is connected to the first port 43 of the second adsorption tower 41b. The other end of the recovery side third dry exhaust gas line 26c is connected to the first port 43 of the third adsorption tower 41c.

The moisture-rich gas line 27 includes a first moisture-rich gas line 28a, a second moisture-rich gas line 28b, and a main moisture-rich gas line 29. One end of the first moisture-rich gas line 28a is connected to a position on the side of the first dehumidification tower 11a rather than the first exhaust gas valve 35a in the first exhaust gas line 22a. One end of the second moisture-rich gas line 28b is connected to a position on the side of the second dehumidification tower 11b rather than the second exhaust gas valve 35b in the second exhaust gas line 22b. The first moisture-rich gas line 28a is provided with the first moisture-rich gas valve 37a, and the second moisture-rich gas line 28b is provided with the second moisture-rich gas valve 37b. One end of the main moisture-rich gas line 29 is connected to the other end of the first moisture-rich gas line 28a and the other end of the second moisture-rich gas line 28b. A suction port of the dehumidification vacuum pump 17 is connected to the other end of the main moisture-rich gas line 29.

The off-gas line 30 includes a recovery side first off-gas line 31a, a recovery side second off-gas line 31b, a recovery side third off-gas line 31c, a main off-gas line 32, a dehumidification side first off-gas line 33a, and a dehumidification side second off-gas line 33b. One end of the recovery side first off-gas line 31a is connected to the second port 44 of the first adsorption tower 41a. One end of the recovery side second off-gas line 31b is connected to the second port 44 of the second adsorption tower 41b. One end of the recovery side third off-gas line 31c is connected to the second port 44 of the third adsorption tower 41c. The other end of the recovery side first off-gas line 31a, the other end of the recovery side second off-gas line 31b, and the other end of the recovery side third off-gas line 31c are connected to a one end side part of the main off-gas line 32. One end of the dehumidification side first off-gas line 33a and one end of the dehumidification side second off-gas line 33b are connected to the other end of the main off-gas line 32. The other end of the dehumidification side first off-gas line 33a is connected to the second port 14 of the first dehumidification tower 11a. The other end of the dehumidification side second off-gas line 33b is connected to the second port 14 of the second dehumidification tower 11b. The dehumidification side first off-gas line 33a is provided with the dehumidification side first off-gas valve 38a. The dehumidification side second off-gas line 33b is provided with the dehumidification side second off-gas valve 38b.

The carbon dioxide recovery device 40 includes the blowing machine 16, the dry exhaust gas line 23, a suction machine 50, a recovery side first dry exhaust gas valve 56a, a recovery side second dry exhaust gas valve 56b, a recovery side third dry exhaust gas valve 56c, a first suction valve 57a, a second suction valve 57b, a third suction valve 57c, a recovery side first off-gas valve 58a, a recovery side second off-gas valve 58b, a recovery side third off-gas valve 58c, a recovery gas valve 60, a non-recovery gas valve 61, a recovery gas tank 63, a suction line 65, the off-gas line 30, a discharge line 68, a carbon dioxide recovery line 70, a non-recovery gas line 71, and a control device 80 in addition to the first adsorption tower 41a, the second adsorption tower 41b, and the third adsorption tower 41c described above.

In the components of the carbon dioxide recovery device 40, the blowing machine 16, the dry exhaust gas line 23, and the off-gas line 30 are components of the carbon dioxide recovery device 40 and are also components of the pretreatment device 10.

The recovery side first dry exhaust gas valve 56a is provided in the recovery side first dry exhaust gas line 26a described above. The recovery side second dry exhaust gas valve 56b is provided in the recovery side second dry exhaust gas line 26b described above. The recovery side third dry exhaust gas valve 56c is provided in the recovery side third dry exhaust gas line 26c described above. The recovery side first off-gas valve 58a is provided in the recovery side first off-gas line 31a described above. The recovery side second off-gas valve 58b is provided in the recovery side second off-gas line 31b described above. The recovery side third off-gas valve 58c is provided in the recovery side third off-gas line 31c described above.

The suction line 65 includes a first suction line 66a, a second suction line 66b, a third suction line 66c, and a main suction line 67. One end of the first suction line 66a is connected to a position on the side of the first adsorption tower 41a rather than the recovery side first dry exhaust gas valve 56a in the recovery side first dry exhaust gas line 26a. The first suction line 66a is provided with the first suction valve 57a. One end of the second suction line 66b is connected to a position on the side of the second adsorption tower 41b rather than the recovery side second dry exhaust gas valve 56b in the recovery side second dry exhaust gas line 26b. The second suction line 66b is provided with the second suction valve 57b. One end of the third suction line 66c is connected to a position on the side of the third adsorption tower 41c rather than the recovery side third dry exhaust gas valve 56c in the recovery side third dry exhaust gas line 26c. The third suction line 66c is provided with the third suction valve 57c. The other end of the first suction line 66a, the other end of the second suction line 66b, and the other end of the third suction line 66c are connected to one end side part of the main suction line 67. The other end of the main suction line 67 is connected to a suction port of the suction machine 50.

The suction machine 50 is, for example, a vacuum pump.

One end of the discharge line 68 is connected to a discharge port of the suction machine 50. One end of the carbon dioxide recovery line 70 and one end of the non-recovery gas line 71 are connected to the other end of the discharge line 68. The non-recovery gas line 71 includes a non-recovery gas discharge line 72a having an open end. The non-recovery gas valve 61 includes a discharge valve 62a provided in the non-recovery gas discharge line 72a. The other end of the carbon dioxide recovery line 70 is connected to the recovery gas tank 63. The carbon dioxide recovery line 70 is provided with the recovery gas valve 60.

The control device 80 includes a pressure gauge 81 which is provided for each of the three adsorption towers 41 and a valve controller 82 which controls the operation of the recovery gas valve 60 and the discharge valve 62a based on the pressure detected by the pressure gauge 81.

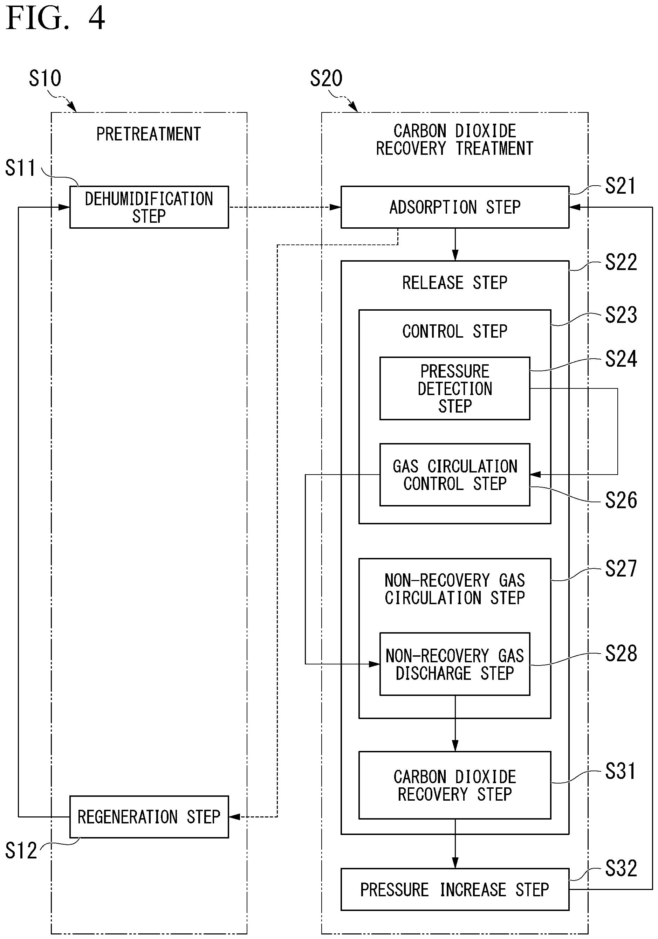

Next, the operation of the carbon dioxide recovery facility described above will be described according to the flowchart shown in FIG. 4.

The carbon dioxide recovery facility executes a pretreatment S10 and a carbon dioxide recovery treatment S20. The pretreatment S10 is executed by the pretreatment device 10, and the carbon dioxide recovery treatment S20 is executed by the carbon dioxide recovery device 40.

In the pretreatment S10, a dehumidification step S11 and a regeneration step S12 are executed. It is assumed that the moisture adsorption amount of the moisture adsorbing material 15 in the first dehumidification tower 11a is extremely small and the moisture adsorption amount of the moisture adsorbing material 15 in the second dehumidification tower 11b is large. In this case, as shown in FIG. 1, the first exhaust gas valve 35a is in an open state, the second exhaust gas valve 35b is in a closed state, the dehumidification side first dry exhaust gas valve 36a is in an open state, the dehumidification side second dry exhaust gas valve 36b is in a closed state, the first moisture-rich gas valve 37a is in a closed state, the second moisture-rich gas valve 37b is in an open state, the dehumidification side first off-gas valve 38a is in a closed state, and the dehumidification side second off-gas valve 38b is in an open state.

In this case, the exhaust gas from the exhaust gas generation source 1 flows into the first dehumidification tower 11a through the main exhaust gas line 21, the blowing machine 16, the first exhaust gas line 22a, and the first exhaust gas valve 35a. As the exhaust gas having flowed into the first dehumidification tower 11a passes through the moisture adsorbing material 15 in the first dehumidification tower 11a, most of the moisture contained in the exhaust gas is adsorbed by the moisture adsorbing material 15 and the remainder is exhausted from the first dehumidification tower 11a as a dry exhaust gas. That is, the exhaust gas is dehumidified in the first dehumidification tower 11a. The dry exhaust gas is sent to the carbon dioxide recovery device 40 through the dehumidification side first dry exhaust gas line 24a, the dehumidification side first dry exhaust gas valve 36a, and the main dry exhaust gas line 25 (dehumidification step S11).

Further, in this case, the off-gas with low moisture content flows from the carbon dioxide recovery device 40 into the second dehumidification tower 11b through the main off-gas line 32, the dehumidification side second off-gas line 33b, and the dehumidification side second off-gas valve 38b. As the off-gas having flowed into the second dehumidification tower 11b passes through the moisture adsorbing material 15 in the second dehumidification tower 11b, the moisture is released from the moisture adsorbing material 15 and the gas is exhausted from the second dehumidification tower 11b together with the moisture. That is, the moisture adsorbing material 15 is regenerated in the second dehumidification tower 11b. The off-gas containing the moisture is discharged to the outside as a moisture-rich gas through the second moisture-rich gas line 28b, the second moisture-rich gas valve 37b, the main moisture-rich gas line 29, and the dehumidification vacuum pump 17 (regeneration step S12). Furthermore, the moisture-rich gas may be discharged into the atmosphere or tank.

As described above, when the dehumidification step S 11 is executed in the first dehumidification tower 11a, the moisture adsorption amount of the moisture adsorbing material 15 in the first dehumidification tower 11a increases. Further, when the regeneration step S12 is executed in the second dehumidification tower 11b, the moisture adsorption amount of the moisture adsorbing material 15 in the second dehumidification tower 11b becomes extremely small.

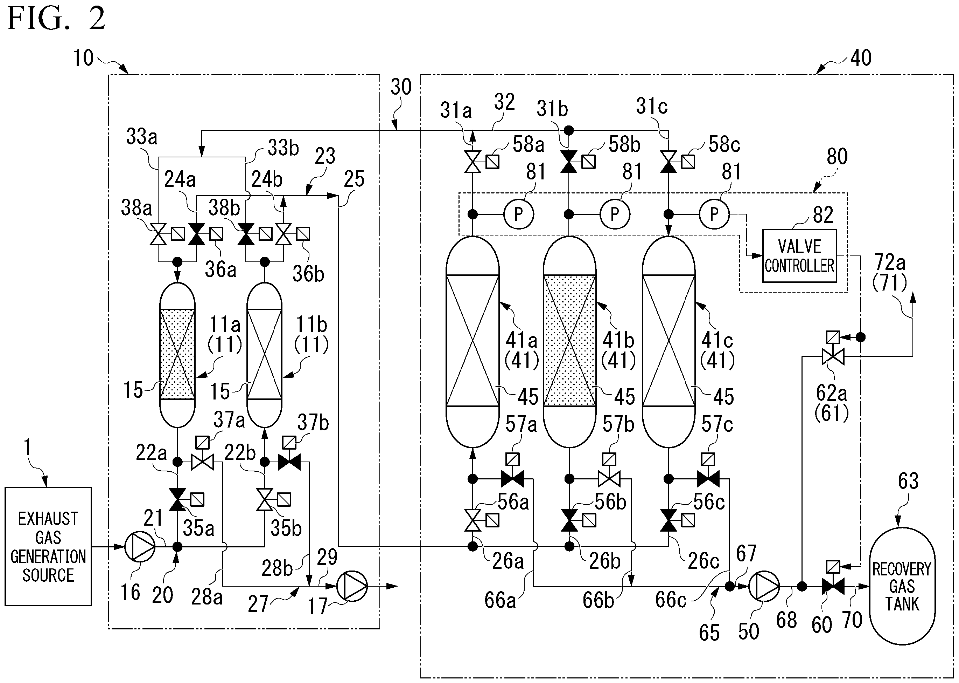

Further, it is assumed that the moisture adsorption amount of the moisture adsorbing material 15 in the first dehumidification tower 11a is large and the moisture adsorption amount of the moisture adsorbing material 15 in the second dehumidification tower 11b is extremely small. In this case, as shown in FIG. 2, the first exhaust gas valve 35a is in a closed state, the second exhaust gas valve 35b is in an open state, the dehumidification side first dry exhaust gas valve 36a is in a closed state, the dehumidification side second dry exhaust gas valve 36b is in an open state, the first moisture-rich gas valve 37a is in an open state, the second moisture-rich gas valve 37b is in a closed state, the dehumidification side first off-gas valve 38a is in an open state, and the dehumidification side second off-gas valve 38b is in a closed state.

In this case, the exhaust gas from the exhaust gas generation source 1 flows into the second dehumidification tower 11b through the main exhaust gas line 21, the blowing machine 16, the second exhaust gas line 22b, and the second exhaust gas valve 35b. As the exhaust gas having flowed into the second dehumidification tower 11b passes through the moisture adsorbing material 15 in the second dehumidification tower 11b, most of the moisture contained in the exhaust gas is adsorbed by the moisture adsorbing material 15, and the remainder is exhausted from the second dehumidification tower 11b as a dry exhaust gas. That is, the exhaust gas is dehumidified in the second dehumidification tower 11b. The dry exhaust gas is sent to the carbon dioxide recovery device 40 through the dehumidification side second dry exhaust gas line 24b, the dehumidification side second dry exhaust gas valve 36b, and the main dry exhaust gas line 25 (dehumidification step S11).

Further, in this case, the off-gas with low moisture content flows from the carbon dioxide recovery device 40 into the first dehumidification tower 11a through the main off-gas line 32, the dehumidification side first off-gas line 33a, and the dehumidification side first off-gas valve 38a. As the off-gas having flowed into the first dehumidification tower 11a passes through the moisture adsorbing material 15 in the first dehumidification tower 11a, the moisture is released from the moisture adsorbing material 15 and the gas is exhausted from the first dehumidification tower 11a together with moisture. That is, the moisture adsorbing material 15 is regenerated in the first dehumidification tower 11a. The off-gas containing the moisture is discharged to the outside as a moisture-rich gas through the first moisture-rich gas line 28a, the first moisture-rich gas valve 37a, the main moisture-rich gas line 29, and the dehumidification vacuum pump 17 (regeneration step S12).

As described above, in the first dehumidification tower 11a and the second dehumidification tower 11b of the pretreatment device 10, the regeneration step S12 is executed after the dehumidification step S11, and the dehumidification step S11 is executed after the regeneration step S12. Further, when the dehumidification step S11 is executed in the first dehumidification tower 11a, the regeneration step S12 is executed in the second dehumidification tower 11b. Further, when the dehumidification step S11 is executed in the second dehumidification tower 11b, the regeneration step S12 is executed in the first dehumidification tower 11a. Therefore, in this embodiment, the moisture in the exhaust gas can be continuously removed.

In the carbon dioxide recovery treatment S20, an adsorption step S21, a release step S22, and a pressure increase step S32 are executed. It is assumed that the carbon dioxide adsorption amount of the carbon dioxide adsorbing material 45 in the first adsorption tower 41a and the carbon dioxide adsorbing material 45 in the second adsorption tower 41b is extremely small and the carbon dioxide adsorption amount of the carbon dioxide adsorbing material 45 in the third adsorption tower 41c is large. Further, it is assumed that the pressure in the first adsorption tower 41a is a negative pressure and the pressure in the second adsorption tower 41b is an approximately atmospheric pressure. In this case, as shown in FIG. 1, the recovery side first dry exhaust gas valve 56a is in a closed state, the recovery side second dry exhaust gas valve 56b is in an open state, the recovery side third dry exhaust gas valve 56c is in a closed state, the first suction valve 57a is in a closed state, the second suction valve 57b is in a closed state, the third suction valve 57c is in an open state, the recovery side first off-gas valve 58a is in a half opened state, the recovery side second off-gas valve 58b is in an open state, and the recovery side third off-gas valve 58c is in a closed state.

In this case, the dry exhaust gas from the pretreatment device 10 flows into the second adsorption tower 41b through the main dry exhaust gas line 25, the recovery side second dry exhaust gas line 26b, and the recovery side second dry exhaust gas valve 56b. As the dry exhaust gas having flowed into the second adsorption tower 41b passes through the carbon dioxide adsorbing material 45 in the second adsorption tower 41b, most of the carbon dioxide contained in the dry exhaust gas is adsorbed by the carbon dioxide adsorbing material 45 and the remainder is exhausted from the second adsorption tower 41b as an off-gas. That is, the carbon dioxide adsorbing material 45 in the second adsorption tower 41b adsorbs the carbon dioxide in the dry exhaust gas (adsorption step S21). As described above, the carbon dioxide adsorbing material 45 is a porous structure. Therefore, since the gas flow in the second adsorption tower 41b does not cause fluidization, it is possible to prevent the carbon dioxide adsorbing material 45 from flowing out of the adsorption tower 41. A part of the off-gas exhausted from the second adsorption tower 41b is sent to the dehumidification tower 11 in the regeneration step S12 through the recovery side second off-gas line 31b, the recovery side second off-gas valve 58b, and the main off-gas line 32.

Further, the remaining part of the off-gas exhausted from the second adsorption tower 41b is sent to the first adsorption tower 41a through the recovery side second off-gas line 31b, the recovery side second off-gas valve 58b, the main off-gas line 32, the recovery side first off-gas line 31a, and the recovery side first off-gas valve 58a. As a result, the pressure in the first adsorption tower 41a is increased from a negative pressure to an approximately atmospheric pressure (pressure increase step S32).

Further, in this case, the inside of the third adsorption tower 41c is vacuum-suctioned by the suction machine 50 through the third suction line 66c, the third suction valve 57c, and the main suction line 67. As a result, the carbon dioxide adsorbed by the carbon dioxide adsorbing material 45 in the third adsorption tower 41c is released and discharged from the suction machine 50 (release step S22). Furthermore, the release step S22 will be described in detail later.

As described above, when the adsorption step S21 is executed in the second adsorption tower 41b, the carbon dioxide adsorption amount of the carbon dioxide adsorbing material 45 in the second adsorption tower 41b increases. Further, when the release step S22 is executed in the third adsorption tower 41c, the carbon dioxide adsorption amount of the carbon dioxide adsorbing material 45 in the third adsorption tower 41c is extremely small and the pressure in the third adsorption tower 41c is a negative pressure. Further, when the pressure increase step S32 is executed in the first adsorption tower 41a, the pressure in the first adsorption tower 41a becomes an approximately atmospheric pressure. Furthermore, at this time, the carbon dioxide adsorption amount of the carbon dioxide adsorbing material 45 in the first adsorption tower 41a is extremely small.

Further, it is assumed that the carbon dioxide adsorption amount of the carbon dioxide adsorbing material 45 in the first adsorption tower 41a and the carbon dioxide adsorbing material 45 in the third adsorption tower 41c is extremely small and the carbon dioxide adsorption amount of the carbon dioxide adsorbing material 45 in the second adsorption tower 41b is large. Further, it is assumed that the pressure in the first adsorption tower 41a is an approximately atmospheric pressure and the pressure in the third adsorption tower 41c is a negative pressure. In this case, as shown in FIG. 2, the recovery side first dry exhaust gas valve 56a is in an open state, the recovery side second dry exhaust gas valve 56b is in a closed state, the recovery side third dry exhaust gas valve 56c is in a closed state, the first suction valve 57a is in a closed state, the second suction valve 57b is in an open state, the third suction valve 57c is in a closed state, the recovery side first off-gas valve 58a is in an open state, the recovery side second off-gas valve 58b is in a closed state, and the recovery side third off-gas valve 58c is in a half opened state.

In this case, the dry exhaust gas from the pretreatment device 10 flows into the first adsorption tower 41a through the main dry exhaust gas line 25, the recovery side first dry exhaust gas line 26a, and the recovery side first dry exhaust gas valve 56a. As the dry exhaust gas having flowed into the first adsorption tower 41a passes through the carbon dioxide adsorbing material 45 in the first adsorption tower 41a, most of the carbon dioxide contained in the dry exhaust gas is adsorbed by the carbon dioxide adsorbing material 45 and the remainder is exhausted from the first adsorption tower 41a as an off-gas. That is, the first adsorption tower 41a adsorbs the carbon dioxide in the dry exhaust gas (adsorption step S21). A part of the off-gas exhausted from the first adsorption tower 41a is sent to the dehumidification tower 11 in the regeneration step S12 through the recovery side first off-gas line 31a, the recovery side first off-gas valve 58a, and the main off-gas line 32.

Further, the remaining part of the off-gas exhausted from the first adsorption tower 41a is sent to the third adsorption tower 41c through the recovery side first off-gas line 31a, the recovery side first off-gas valve 58a, the main off-gas line 32, the recovery side third off-gas line 31c, and the recovery side third off-gas valve 58c. As a result, the pressure in the third adsorption tower 41c is increased from a negative pressure to an approximately atmospheric pressure (pressure increase step S32).

Further, in this case, the inside of the second adsorption tower 41b is vacuum-suctioned by the suction machine 50 through the second suction line 66b, the second suction valve 57b, and the main suction line 67. As a result, the carbon dioxide adsorbed by the carbon dioxide adsorbing material 45 in the second adsorption tower 41b is released and discharged from the suction machine 50 (release step S22).

As described above, in the first adsorption tower 41a, the second adsorption tower 41b, and the third adsorption tower 41c of the carbon dioxide recovery device 40, the release step S22 is executed after the adsorption step S21, the pressure increase step S32 is executed after the release step S22, and the adsorption step S21 is executed after the pressure increase step S32. Further, when the adsorption step S21 is executed in the second adsorption tower 41b, the release step S22 is executed in the third adsorption tower 41c, and the pressure increase step S32 is executed in the first adsorption tower 41a. Further, when the carbon dioxide adsorption amount of the carbon dioxide adsorbing material 45 in the second adsorption tower 41b increases, the release step S22 is executed in the second adsorption tower 41b, the pressure increase step S32 is executed in the third adsorption tower 41c, and the adsorption step S21 is executed in the first adsorption tower 41a. Therefore, in this embodiment, the carbon dioxide in the dry exhaust gas can be continuously recovered.

In this embodiment, as described above, the pressure increase step S32 is executed after the release step S22.

The vacuum degree in the adsorption tower 41 after the release step S22 is high. Therefore, when the adsorption step S21 is executed while the vacuum degree is kept high, the exhaust gas passes through the carbon dioxide adsorbing material 45 even when the exhaust gas is sent to the adsorption tower 41, and hence the carbon dioxide adsorption efficiency decreases. Therefore, in this embodiment, the pressure increase step S32 is executed after the release step S22 and then the adsorption step S21 is executed.

By the way, zeolite used as the carbon dioxide adsorbent in this embodiment is a general term for crystalline aluminosilicate. The chemical formula of zeolite can be expressed as below.
Me₂/xO ▪ Al₂O₃ ▪ mSiO₂ ▪ nH₂O Me: X-valent cation

The crystal structure of zeolite is not uniform, and there are, for example, A type, X type, Y type, beta type, and the like. In addition, as Me shown in the above chemical formula, Na ions, Li ions, Ca ions, and the like are used. Thus, there are various types of zeolites depending on the difference in their crystal structures and cations. For example, zeolite with an X-type crystal structure and using Na ions as Me is referred to as NaX type. Further, zeolite having an X-type crystal structure and using Li ions as Me is referred to as LiX type, and zeolite having an X-type crystal structure and using Ca ions as Me is referred to as CaX type.

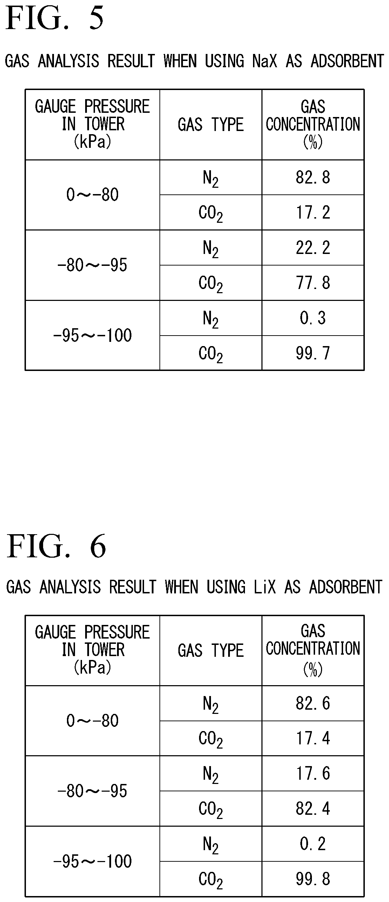

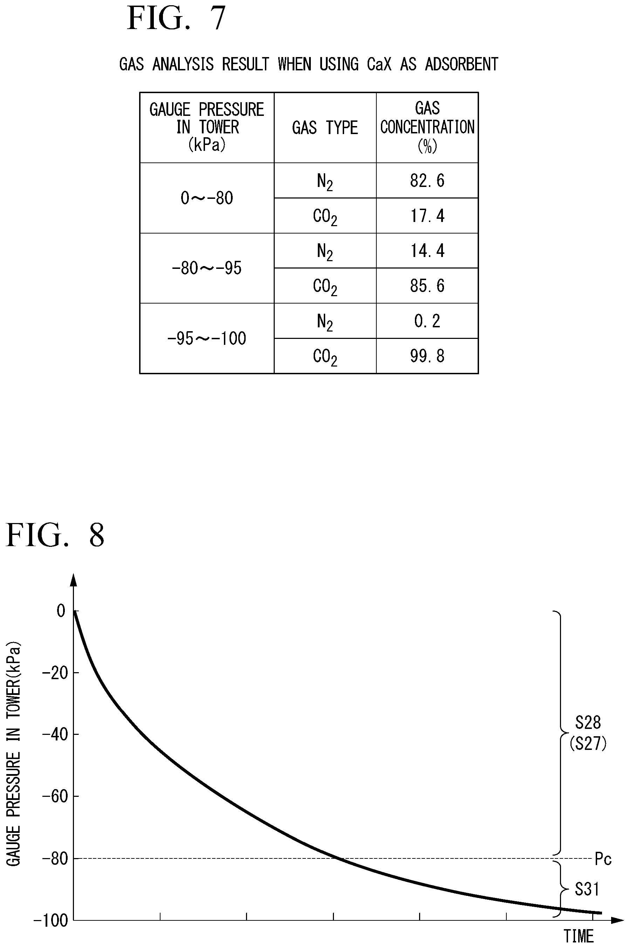

The inventor vacuum-suctioned the inside of the adsorption tower 41 and analyzed the gas components in the suction gas according to the gauge pressure in the adsorption tower 41 at that time. The gas analysis results are shown in FIGS. 5 to 7. Furthermore, FIG. 5 shows an analysis result when NaX type zeolite was used. FIG. 6 shows an analysis result when LiaX type zeolite was used. FIG. 7 shows an analysis result when CaX type zeolite was used.

As shown in FIGS. 5 to 7, when the vacuum degree in the adsorption tower 41 is low, in other words, when the gauge pressure in the adsorption tower 41 is high regardless of the type of zeolite, the nitrogen concentration in the suction gas is high and the carbon dioxide concentration in the suction gas is low. When the vacuum degree in the adsorption tower 41 is increased, in other words, the gauge pressure in the adsorption tower 41 is decreased, the nitrogen concentration in the suction gas gradually decreases and the carbon dioxide concentration in the suction gas gradually increases. For example, when the gauge pressure in the adsorption tower 41 is -80 kPa, the carbon dioxide concentration in the suction gas is approximately 80% regardless of the type of zeolite used.

From the above analysis results, the inventor could recover high-concentration carbon dioxide by not recovering the suction gas in a tank or the like when the pressure in the adsorption tower 41 is a low vacuum based on a predetermined recovery pressure Pc and by recovering the suction gas in a tank or the like when the pressure in the adsorption tower 41 is a high vacuum based on the recovery pressure Pc. Furthermore, in this embodiment and each of the following embodiments, the recovery pressure Pc is set to -80 kPaG.

As shown in FIG. 4, the release step S22 described above includes a control step S23, a non-recovery gas circulation step S27, and a carbon dioxide recovery step S31. The control step S23 includes a pressure detection step S24 of detecting the pressure in the adsorption tower 41 in the release step S22 by the pressure gauge 81 and a gas circulation control step S26 of controlling the opening and closing of the recovery gas valve 60 and the discharge valve 62a by the valve controller 82 based on the pressure detected by the pressure gauge 81. Further, the non-recovery gas circulation step S27 includes a non-recovery gas discharge step S28 of discharging the suction gas from the suction machine 50 to the atmosphere.

When the inside of the adsorption tower 41 which is the execution target of the release step S22 is vacuum-suctioned by the suction machine 50, the gauge pressure in the adsorption tower 41 gradually decreases with time, in other words, the vacuum degree in the adsorption tower 41 gradually increases as shown in FIG. 8. When the pressure in the adsorption tower 41 detected by the pressure gauge 81 is a low vacuum based on the recovery pressure Pc, the valve controller 82 issues a close command to the recovery gas valve 60 and issues an open command to the discharge valve 62a (gas circulation control step S26). As a result, the recovery gas valve 60 is in a closed state, the discharge valve 62a is in an open state, and the suction gas from the suction machine 50 is discharged to the atmosphere through the non-recovery gas discharge line 72a and the discharge valve 62a (non-recovery gas discharge step S28).

When the gauge pressure in the adsorption tower 41 gradually decreases and the pressure in the adsorption tower 41 detected by the pressure gauge 81 is a high vacuum based on the recovery pressure Pc, the valve controller 82 issues an open command to the recovery gas valve 60 and issues a close command to the discharge valve 62a (gas circulation control step S26). As a result, the recovery gas valve 60 is in an open state, the discharge valve 62a is in a closed state, and the suction gas from the suction machine 50 is recovered by the recovery gas tank 63 through the carbon dioxide recovery line 70 and the recovery gas valve 60 (carbon dioxide recovery step S31).

As described above, in this embodiment, when the pressure in the adsorption tower 41 is a high vacuum based on the recovery pressure Pc, the suction gas from the suction machine 50 is guided to the recovery gas tank 63. As described above, when the vacuum degree in the adsorption tower 41 is a higher vacuum than the recovery pressure Pc (-80 kPaG), the concentration of carbon dioxide in the suction gas is approximately 80% or more. Therefore, in this embodiment, high-concentration carbon dioxide can be recovered.

Further, in this embodiment, since high-concentration carbon dioxide can be recovered as described above without providing a first-stage adsorption tower and a second-stage adsorption tower as in the facility described above in Non-Patent Document 1, the number of devices that constitute the facility can be reduced. Thus, in this embodiment, it is possible to suppress an increase in installation area for the facility and facility cost.

Further, in this embodiment, since high-concentration carbon dioxide can be recovered without executing the adsorption step S21 in two stages, it is possible to shorten the time required to recover carbon dioxide from the exhaust gas.

### "Second embodiment"

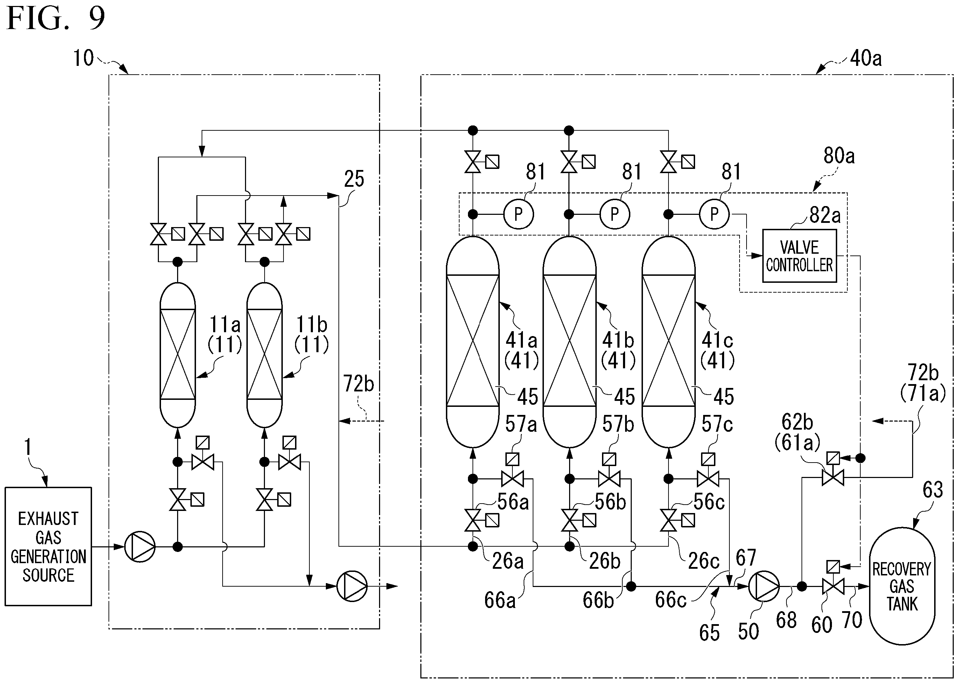

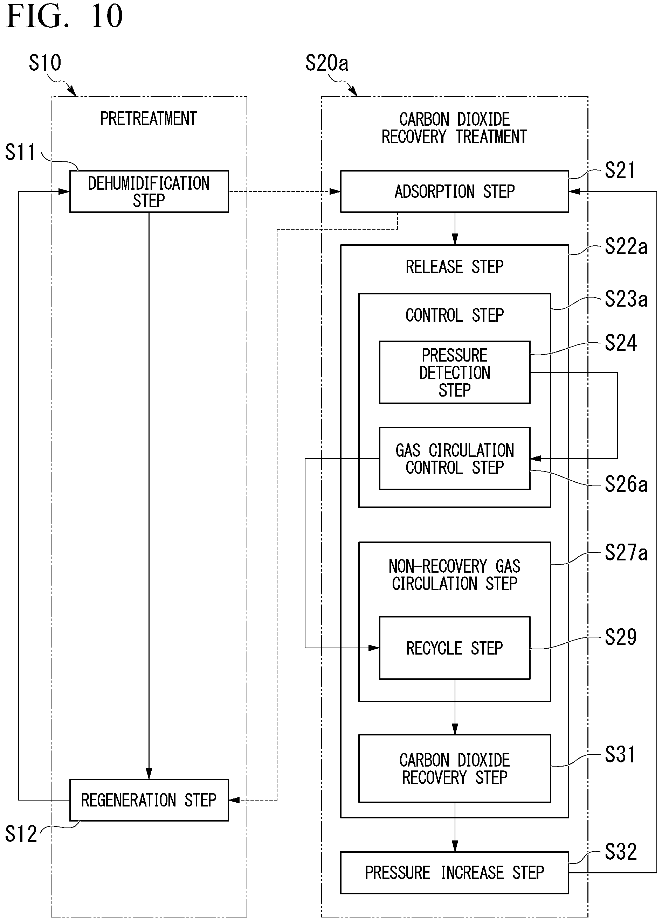

A second embodiment of the carbon dioxide recovery facility will be described with reference to FIGS. 9 and 10.

As shown in FIG. 9, the carbon dioxide recovery facility of this embodiment includes the pretreatment device 10 and a carbon dioxide recovery device 40a as in the carbon dioxide recovery facility of the first embodiment. The pretreatment device 10 of this embodiment is the same as the pretreatment device 10 of the first embodiment. On the other hand, the carbon dioxide recovery device 40a of this embodiment is different from the carbon dioxide recovery device 40 of the first embodiment.

In the carbon dioxide recovery device 40 of the first embodiment, the non-recovery gas line 71 includes the non-recovery gas discharge line 72a and the non-recovery gas valve 61 includes the discharge valve 62a. On the other hand, in the carbon dioxide recovery device 40a of this embodiment, the non-recovery gas line 71a includes a recycle line 72b and the non-recovery gas valve 61a includes a recycle valve 62b. Therefore, the operation of the valve controller 82a of the control device 80a is also different from the operation of the valve controller 82 of the control device 80 of the first embodiment.

One end of the recycle line 72b is connected to the other end of the discharge line 68, and the other end of the recycle line 72b is connected to the main dry exhaust gas line 25. The recycle line 72b is provided with the recycle valve 62b described above.

That is, in this embodiment, the recycle line 72b is provided instead of the non-recovery gas discharge line 72a of the first embodiment, and the recycle valve 62b is provided instead of the discharge valve 62a of the first embodiment.

Next, the operation of the carbon dioxide recovery facility of this embodiment will be described according to the flowchart shown in FIG. 10.

The carbon dioxide recovery facility of this embodiment also executes the pretreatment S10 and a carbon dioxide recovery treatment S20a as in the carbon dioxide recovery facility of the first embodiment. The pretreatment S10 is the same as the pretreatment S10 of the first embodiment. On the other hand, the carbon dioxide recovery treatment S20a is different from the carbon dioxide recovery treatment S20 of the first embodiment.

The carbon dioxide recovery treatment S20a of this embodiment also includes the adsorption step S21, a release step S22a, and the pressure increase step S32 as in the carbon dioxide recovery treatment S20 of the first embodiment. The adsorption step S21 of this embodiment is the same as the adsorption step S21 of the first embodiment. Further, the pressure increase step S32 of this embodiment is the same as the pressure increase step S32 of the first embodiment. The release step S22a of this embodiment also includes a control step S23a, a non-recovery gas circulation step S27a, and the carbon dioxide recovery step S31 as in the release step S22 of the first embodiment. The control step S23a of this embodiment also includes the pressure detection step S24 and a gas circulation control step S26a as in the control step S23 of the first embodiment. However, in this embodiment, since the recycle valve 62b is provided instead of the discharge valve 62a of the first embodiment as described above, the control contents of the gas circulation control step S26a by the valve controller 82a are different from those of the gas circulation control step S26 of the first embodiment. Further, the non-recovery gas circulation step S27a includes a recycle step S29 instead of the non-recovery gas discharge step S28 of the non-recovery gas circulation step S27 of the first embodiment.

When the inside of the adsorption tower 41 which is the execution target of the release step S22a is vacuum-suctioned by the suction machine 50, the gauge pressure in the adsorption tower 41 gradually decreases, in other words, the vacuum degree in the adsorption tower 41 gradually increases with time as described above with reference to FIG. 8. When the pressure in the adsorption tower 41 detected by the pressure gauge 81 is a low vacuum based on the recovery pressure Pc, the valve controller 82a issues a close command to the recovery gas valve 60 and issues an open command to the recycle valve 62b (gas circulation control step S26a). As a result, the recovery gas valve 60 is in a closed state, the recycle valve 62b is in an open state, and the suction gas from the suction machine 50 flows into the adsorption tower 41 which is the execution target of the adsorption step S21 through the recycle line 72b, the recycle valve 62b, and the main dry exhaust gas line 25 (recycle step S29).

Even when the pressure in the adsorption tower 41 which is the execution target of the release step S22a is a lower vacuum than the recovery pressure Pc, carbon dioxide is contained in the suction gas. Therefore, in this embodiment, when the pressure in the adsorption tower 41 is a low vacuum based on the recovery pressure Pc, the suction gas from the suction machine 50 is flowed into the adsorption tower 41 which is the execution target of the adsorption step S21 together with the dry exhaust gas, the carbon dioxide in the suction gas is adsorbed by the carbon dioxide adsorbing material 45 in the adsorption tower 41.

When the gauge pressure in the adsorption tower 41 further decreases and the pressure in the adsorption tower 41 detected by the pressure gauge 81 is a high vacuum based on the recovery pressure Pc, the valve controller 82a issues an open command to the recovery gas valve 60 and issues a close command to the discharge valve 62a (gas circulation control step S26a). As a result, the recovery gas valve 60 is in an open state, the discharge valve 62a is in a closed state, and the suction gas from the suction machine 50 is recovered in the recovery gas tank 63 through the carbon dioxide recovery line 70 and the recovery gas valve 60 (carbon dioxide recovery step S31).

As described above, even in this embodiment, as in the first embodiment, when the pressure in the adsorption tower 41 is a high vacuum based on the recovery pressure Pc, the suction gas from the suction machine 50 is guided to the recovery gas tank 63. Thus, even in this embodiment, as in the first embodiment, high-concentration carbon dioxide can be recovered. Therefore, even in this embodiment, as in the first embodiment, it is possible to suppress an increase in installation area for the facility and facility cost. Further, even in this embodiment, it is possible to shorten the time required to recover carbon dioxide from the exhaust gas.

Further, in this embodiment, as described above, when the pressure in the adsorption tower 41 which is the execution target of the release step S22a is a lower vacuum than the recovery pressure Pc, the suction gas from the suction machine 50 is not discharged to the atmosphere and is flowed into the adsorption tower 41 which is the execution target of the adsorption step S21. Therefore, in this embodiment, the carbon dioxide discharge amount can be reduced compared to the first embodiment.

### "Third embodiment"

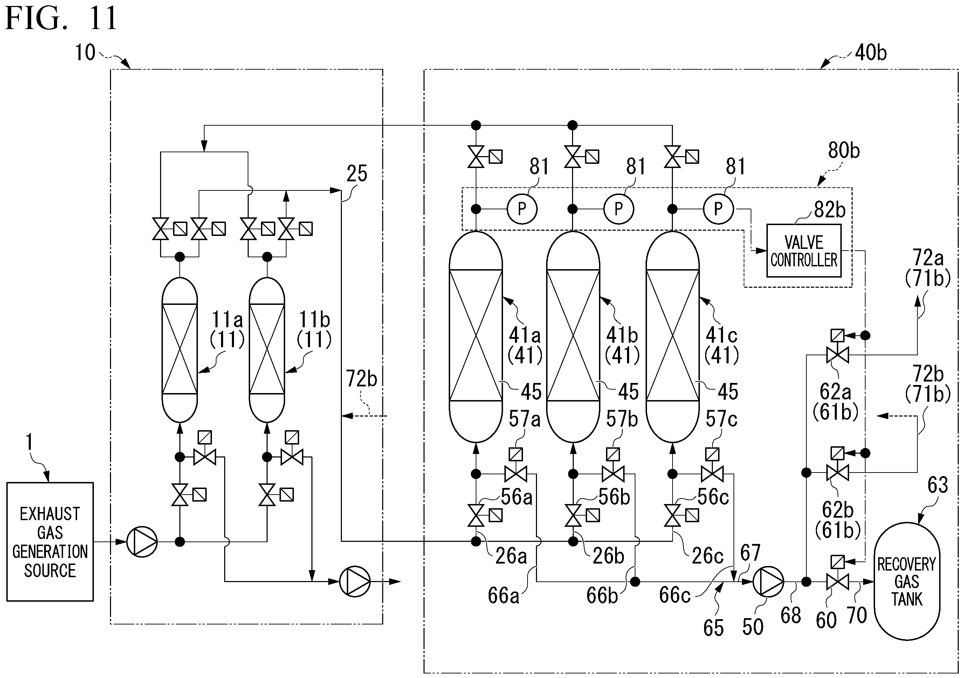

A third embodiment of the carbon dioxide recovery facility will be described with reference to FIGS. 11 to 13.

As shown in FIG. 11, the carbon dioxide recovery facility of this embodiment includes the pretreatment device 10 and a carbon dioxide recovery device 40b as in the carbon dioxide recovery facility of each of the above-described embodiments. The pretreatment device 10 of this embodiment is the same as the pretreatment device 10 of the first embodiment. On the other hand, the carbon dioxide recovery device 40b of this embodiment is different from the carbon dioxide recovery device 40 of the first embodiment.

In the carbon dioxide recovery device 40 of the first embodiment, the non-recovery gas line 71 includes the non-recovery gas discharge line 72a, and the non-recovery gas valve 61 includes the discharge valve 62a. On the other hand, in the carbon dioxide recovery device 40b of this embodiment, the non-recovery gas line 71b includes the recycle line 72b in addition to the non-recovery gas discharge line 72a. Further, the non-recovery gas valve 61b of this embodiment includes the recycle valve 62b in addition to the discharge valve 62a. Therefore, the operation of the valve controller 82b of the control device 80b is also different from the operation of the valve controller 82 of the control device 80 of the first embodiment.

As in the second embodiment, one end of the recycle line 72b is connected to the other end of the discharge line 68, and the other end of the recycle line 72b is connected to the main dry exhaust gas line 25. The recycle line 72b is provided with the recycle valve 62b described above.

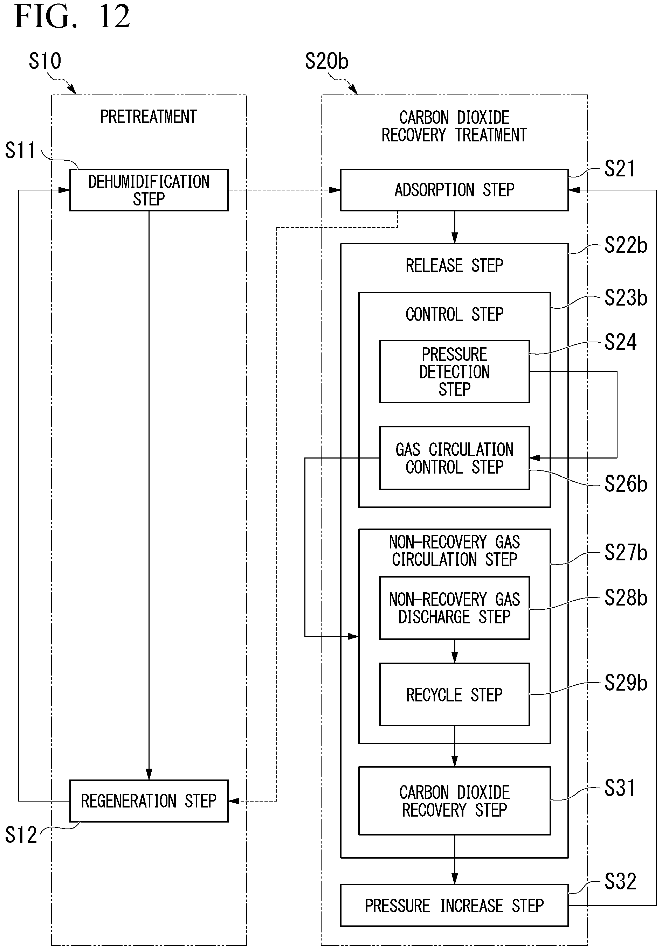

Next, the operation of the carbon dioxide recovery facility of this embodiment will be described according to the flowchart shown in FIG. 12.

The carbon dioxide recovery facility of this embodiment also executes the pretreatment S10 and a carbon dioxide recovery treatment S20b as in the carbon dioxide recovery facility of the first embodiment. The pretreatment S10 is the same as the pretreatment S10 of the first embodiment. On the other hand, the carbon dioxide recovery treatment S20b is different from the carbon dioxide recovery treatment S20 of the first embodiment.

The carbon dioxide recovery treatment S20b of this embodiment also includes the adsorption step S21, a release step S22b, and the pressure increase step S32 as in the carbon dioxide recovery treatment S20 of the first embodiment. The adsorption step S21 of this embodiment is the same as the adsorption step S21 of the first embodiment. Further, the pressure increase step S32 of this embodiment is the same as the pressure increase step S32 of the first embodiment. The release step S22b of this embodiment also includes a control step S23b, a non-recovery gas circulation step S27b, and the carbon dioxide recovery step S31 as in the release step S22 of the first embodiment. The control step S23b of this embodiment also includes the pressure detection step S24 and a gas circulation control step S26b as in the control step S23 of the first embodiment. However, in this embodiment, since the recovery gas valve 60 includes the recycle valve 62b in addition to the discharge valve 62a as described above, the control contents of the gas circulation control step S26b by the valve controller 82b are different from those of the gas circulation control step S26 of the first embodiment. Further, the non-recovery gas circulation step S27b of this embodiment includes a recycle step S29b in addition to a non-recovery gas discharge step S28b.

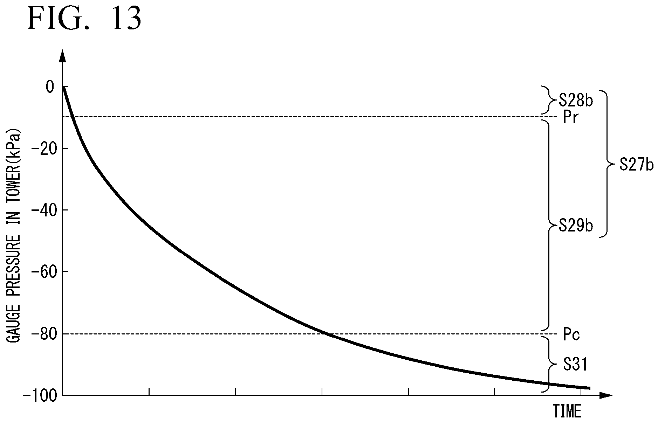

When the inside of the adsorption tower 41 which is the execution target of the release step S22b is vacuum-suctioned by the suction machine 50, the gauge pressure in the adsorption tower 41 gradually decreases, in other words, the vacuum degree in the adsorption tower 41 gradually increases with time as shown in FIG. 13. When the pressure in the adsorption tower 41 detected by the pressure gauge 81 is a lower vacuum than a recycle pressure Pr, the valve controller 82b issues an open command to the discharge valve 62a and issues a close command to the recycle valve 62b and the recovery gas valve 60 (gas circulation control step S26b). As a result, the recycle valve 62b and the recovery gas valve 60 are in a closed state, the discharge valve 62a is in an open state, and the suction gas from the suction machine 50 is discharged to the atmosphere through the non-recovery gas discharge line 72a and the discharge valve 62a (non-recovery gas discharge step S28b).

Furthermore, the recycle pressure Pr is a pressure between the recovery pressure Pc and the atmospheric pressure, and is closer to the atmospheric pressure than the recovery pressure Pc. Further, the recycle pressure Pr is a pressure at which the carbon dioxide concentration in the suction gas from the suction machine 50 becomes lower than the carbon dioxide concentration in the dry exhaust gas when the vacuum is lower than the recycle pressure Pr. The recycle pressure Pr is, for example, -10 kPaG.

When the gauge pressure in the adsorption tower 41 described above further decreases and the pressure in the adsorption tower 41 detected by the pressure gauge 81 is a higher vacuum than the recycle pressure Pr or a lower vacuum than the recovery pressure Pc, the valve controller 82b issues an open command to the recycle valve 62b and issues a close command to the discharge valve 62a and the recovery gas valve 60 (gas circulation control step S26b). As a result, the discharge valve 62a and the recovery gas valve 60 are in a closed stat, the recycle valve 62b is in an open state, and the suction gas from the suction machine 50 flows into the adsorption tower 41 which is the execution target of the adsorption step S21 through the recycle line 72b, the recycle valve 62b, and the main dry exhaust gas line 25 (recycle step S29b).

When the gauge pressure in the adsorption tower 41 further decreases and the pressure in the adsorption tower 41 detected by the pressure gauge 81 is a high vacuum based on the recovery pressure Pc, the valve controller 82b issues an open command to the recovery gas valve 60 and issues a close command to the discharge valve 62a and the recycle valve 62b (gas circulation control step S26b). As a result, the recovery gas valve 60 is in an open state, the discharge valve 62a and the recycle valve 62b are in a closed state, and the suction gas from the suction machine 50 is recovered in the recovery gas tank 63 through the carbon dioxide recovery line 70 and the recovery gas valve 60 (carbon dioxide recovery step S31).

As described above, even in this embodiment, as in each of the above-described embodiments, when the pressure in the adsorption tower 41 is a high vacuum based on the recovery pressure Pc, the suction gas from the suction machine 50 is guided to the recovery gas tank 63. Thus, even in this embodiment, as in each of the above-described embodiments, high-concentration carbon dioxide can be recovered. Therefore, even in this embodiment, as in each of the above-described embodiments, it is possible to suppress an increase in installation area for the facility and facility cost. Further, even in this embodiment, it is possible to shorten the time required to recover carbon dioxide from the exhaust gas.

Further, in this embodiment, as described above, when the pressure in the adsorption tower 41 which is the execution target of the release step S22b is a higher vacuum than the recycle pressure Pr and a lower vacuum than the recovery pressure Pc, the suction gas from the suction machine 50 is not discharged to the atmosphere and is flowed into the adsorption tower 41 which is the execution target of the adsorption step S21. Therefore, in this embodiment, the carbon dioxide discharge amount can be reduced compared to the first embodiment.

Here, when the pressure in the adsorption tower 41 which is the execution target of the release step S22b is a lower vacuum than the recycle pressure Pr, the carbon dioxide concentration in the suction gas from the suction machine 50 is lower than the carbon dioxide concentration in the dry exhaust gas. Thus, only a small amount of carbon dioxide is discharged to the atmosphere. Further, if the suction gas from the suction machine 50 is flowed into the adsorption tower 41 which is the execution target of the adsorption step S21, a gas having a lower carbon dioxide concentration than the dry exhaust gas is flowed into the adsorption tower 41 which is the execution target of the adsorption step S21 together with the dry exhaust gas. In this case, the carbon dioxide adsorption efficiency by the carbon dioxide adsorbing material 45 in the adsorption tower 41 which is the execution target of the adsorption step S21 decreases. In this embodiment, from the above viewpoints, when the pressure in the adsorption tower 41 which is the execution target of the release step S22b is a lower vacuum than the recycle pressure Pr, the suction gas from the suction machine 50 is discharged to the atmosphere.

### "Fourth embodiment"

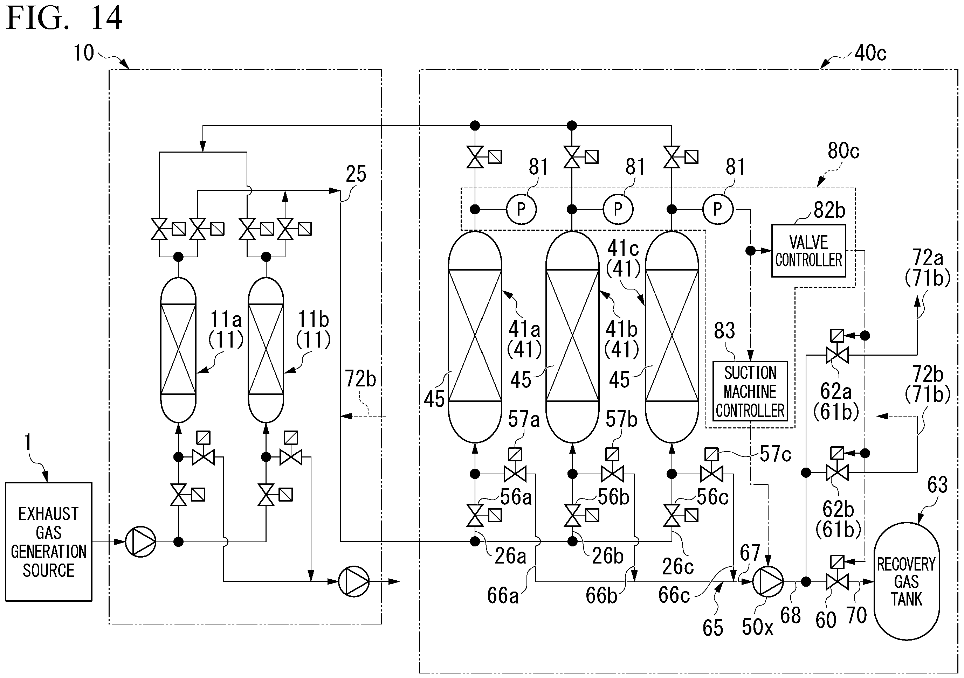

A fourth embodiment of the carbon dioxide recovery facility will be described with reference to FIGS. 14 to 18.

As shown in FIG. 14, the carbon dioxide recovery facility of this embodiment includes the pretreatment device 10 and a carbon dioxide recovery device 40c as in the carbon dioxide recovery facility of each of the above-described embodiments. The pretreatment device 10 of this embodiment is the same as the pretreatment device 10 of the first embodiment. On the other hand, the carbon dioxide recovery device 40c of this embodiment is a modified example of the carbon dioxide recovery device 40b of the third embodiment.

A suction machine 50x of this embodiment is a suction machine capable of changing a suction force. Further, a control device 80c of this embodiment includes a suction machine controller 83 which controls the operation of the suction machine 50 in addition to the valve controller 82b and the pressure gauge 81 of the control device 80b of the third embodiment.

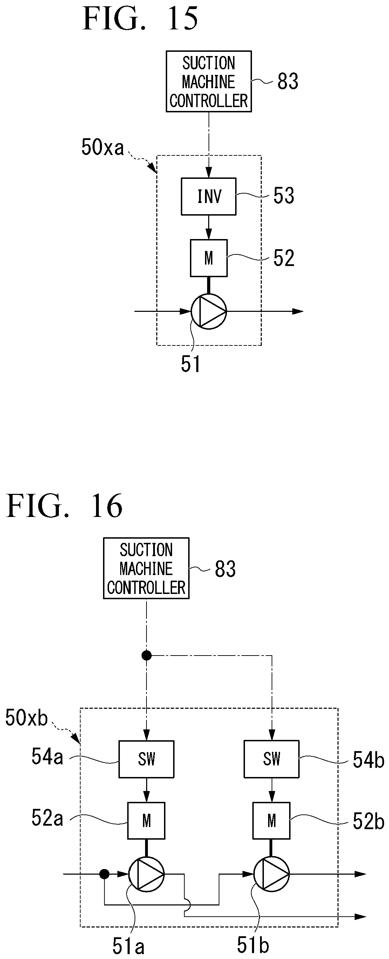

As an example of the suction machine 50x capable of changing the suction force, there is a suction machine xa shown in FIG. 15 or a suction machine 50xb shown in FIG. 16. The suction machine 50xa shown in FIG. 15 includes a suction machine body 51, a motor 52 which drives the suction machine body 51, and an inverter 53 which controls the rotation speed of the motor 52. In the suction machine 50xa, the inverter 53 changes the rotation speed of the motor 52 to change the suction force of the suction machine body 51. Further, the suction machine 50xb shown in FIG. 16 includes a first suction machine body 51a, a first motor 52a which drives the first suction machine body 51a, a first switch 54a which controls the driving of the first motor 52a, a second suction machine body 51b, a second motor 52b which drives the second suction machine body 51b, and a second switch 54b which controls the driving of the second motor 52b. Therefore, a state in which the first suction machine body 51a is operated can be switched to a state in which the second suction machine body 51b is operated by controlling the first switch 54a and the second switch 54b. The suction force of the second suction machine body 51b is higher than the suction force of the first suction machine body 51a. Therefore, in the suction machine 50xb, a state in which the first suction machine body 51a is operated is switched to a state in which the second suction machine body 51b is operated so that the suction force of the suction machine 50xb changes. The first suction machine body 51a and the second suction machine body 51b may be, for example, a vacuum pump. Furthermore, since the suction force of the first suction machine body 51a is lower than the suction force of the second suction machine body 51b, the first suction machine body 51a may be a blower.

The non-recovery gas line 71b of this embodiment is the same as the non-recovery gas line 71b of the third embodiment. That is, the non-recovery gas line 71b of this embodiment also includes the non-recovery gas discharge line 72a and the recycle line 72b. Further, the non-recovery gas valve 61b of this embodiment is the same as the non-recovery gas valve 61b of the third embodiment. That is, the non-recovery gas valve 61b of this embodiment also includes the discharge valve 62a and the recycle valve 62b.

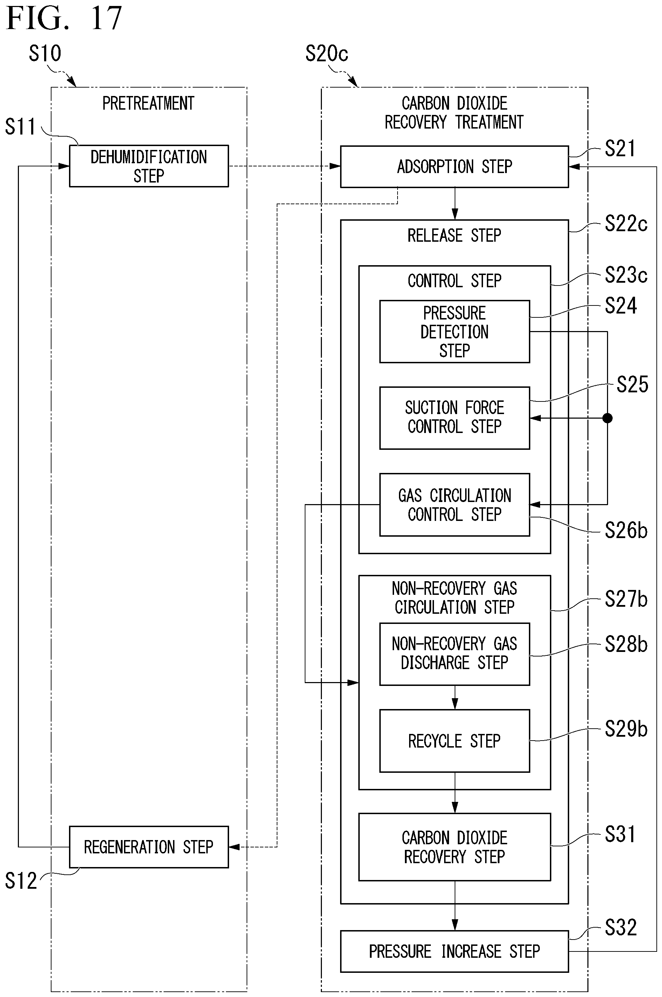

As shown in FIG. 17, the carbon dioxide recovery treatment S20c of this embodiment also includes the adsorption step S21, a release step S22c, and the pressure increase step S32 as in the carbon dioxide recovery treatment S20b of the third embodiment. The adsorption step S21 of this embodiment is the same as the adsorption step S21 of the third embodiment. Further, the pressure increase step S32 of this embodiment is the same as the pressure increase step S32 of the third embodiment. The release step S22c of this embodiment also includes a control step S23c, the non-recovery gas circulation step S27b, and the carbon dioxide recovery step S31 as in the release step S22b of the third embodiment. The control step S23c of this embodiment also includes the pressure detection step S24 and the gas circulation control step S26b as in the control step S23b of the third embodiment. Further, the control step S23c of this embodiment includes a suction force control step S25. That is, the control step S23c of this embodiment includes the pressure detection step S24, the suction force control step S25, and the gas circulation control step S26b. The non-recovery gas circulation step S27b of this embodiment includes the non-recovery gas discharge step S28b and the recycle step S29b as in the non-recovery gas circulation step S27b of the third embodiment. The carbon dioxide recovery step S31 of this embodiment is the same as the carbon dioxide recovery step S31 of the third embodiment.

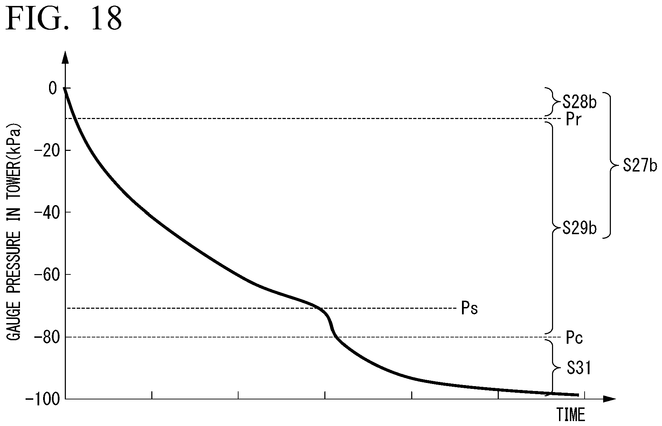

When the inside of the adsorption tower 41 which is the execution target of the release step S22c is vacuum-suctioned by the suction machine 50, the gauge pressure in the adsorption tower 41 gradually decreases, in other words, the vacuum degree in the adsorption tower 41 gradually increases with time as shown in FIG. 18. When the pressure in the adsorption tower 41 detected by the pressure gauge 81 is a lower vacuum than the recycle pressure Pr, as in the third embodiment, the valve controller 82b issues an open command to the discharge valve 62a and issues a close command to the recycle valve 62b and the recovery gas valve 60 (gas circulation control step S26b). As a result, the recycle valve 62b and the recovery gas valve 60 are in a closed state, the discharge valve 62a is in an open state, and the suction gas from the suction machine 50 is discharged to the atmosphere through the non-recovery gas discharge line 72a and the discharge valve 62a (non-recovery gas discharge step S28b).

When the gauge pressure in the adsorption tower 41 further decreases and the pressure in the adsorption tower 41 detected by the pressure gauge 81 is a higher vacuum than the recycle pressure Pr and a lower vacuum than the recovery pressure Pc, the valve controller 82b issues an open command to the recycle valve 62b and issues a close command to the discharge valve 62a and the recovery gas valve 60 (gas circulation control step S26b). As a result, the discharge valve 62a and the recovery gas valve 60 are in a closed state, the recycle valve 62b is in an open state, and the suction gas from the suction machine 50 flows into the adsorption tower 41 which is the execution target of the adsorption step S21 through the recycle line 72b, the recycle valve 62b, and the main dry exhaust gas line 25 (recycle step S29b).

When the pressure in the adsorption tower 41 detected by the pressure gauge 81 is the suction force change pressure Ps, the suction machine controller 83 instructs the suction machine 50x to increase the suction force (suction force control step S25). As a result, the suction force of the suction machine 50x increases, and as shown in FIG. 18, the pressure in the adsorption tower 41 suddenly decreases.

Furthermore, the suction force change pressure Ps described above is a pressure between the recovery pressure Pc and the atmospheric pressure, and is a pressure closer to the recovery pressure Pc than the atmospheric pressure or the same pressure as the recovery pressure Pc. The suction force change pressure Ps is, for example, -70 kPaG.

When the gauge pressure in the adsorption tower 41 further decrease and the pressure in the adsorption tower 41 detected by the pressure gauge 81 is a high vacuum based on the recovery pressure Pc, the valve controller 82b issues an open command to the recovery gas valve 60 and issues a close command to the discharge valve 62a and the recycle valve 62b (gas circulation control step S26b). As a result, the recovery gas valve 60 is in an open state, the discharge valve 62a and the recycle valve 62b are in a closed state, and the suction gas from the suction machine 50x is recovered in the recovery gas tank 63 through the carbon dioxide recovery line 70 and the recovery gas valve 60 (carbon dioxide recovery step S31).

As described above, even in this embodiment, as in each of the above-described embodiments, when the pressure in the adsorption tower 41 is a high vacuum based on the recovery pressure Pc, the suction gas from the suction machine 50x is guided to the recovery gas tank 63. Thus, even in this embodiment, as in each of the above-described embodiments, high-concentration carbon dioxide can be recovered. Therefore, even in this embodiment, as in each of the above-described embodiments, it is possible to suppress an increase in installation area for the facility and facility cost. Further, even in this embodiment, it is possible to shorten the time required to recover carbon dioxide from the exhaust gas.

Further, even in this embodiment, since the non-recovery gas discharge step S28b and the recycle step S29b are executed as in the third embodiment, the same effect as that of the third embodiment can be obtained.

Further, in this embodiment, when the pressure is close to the recovery pressure Pc or is the suction force change pressure Ps which is the same pressure as the recovery pressure Pc, the suction force by the suction machine 50x is increased. Thus, as described above, the pressure in the adsorption tower 41 suddenly decreases after the pressure becomes the suction force change pressure Ps. Therefore, in this embodiment, the execution time of the carbon dioxide recovery step S31 can be shortened compared to the third embodiment.

Furthermore, this embodiment is the modified example of the third embodiment, but the characteristic configuration of this embodiment may be applied to the first embodiment or the second embodiment. That is, the suction force of the suction machine 50x may be controlled by the suction machine controller 83 by using the suction machine 50x capable of changing the suction force as the suction machine of the first embodiment and the second embodiment.

### "Fifth embodiment"

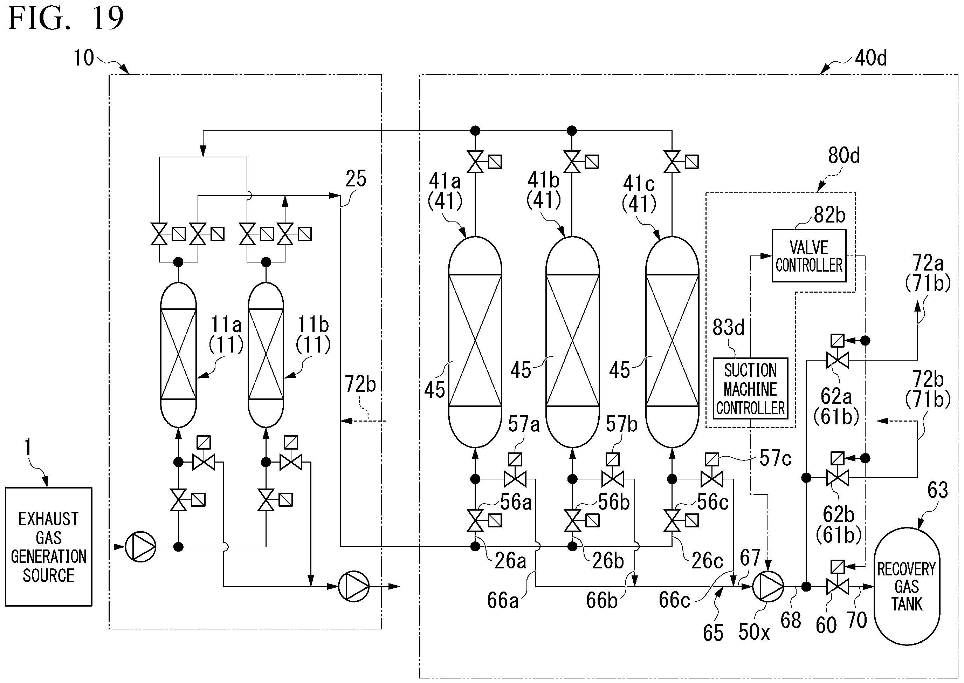

A fifth embodiment of the carbon dioxide recovery facility will be described with reference to FIGS. 19 to 21.

As shown in FIG. 19, the carbon dioxide recovery facility of this embodiment includes the pretreatment device 10 and a carbon dioxide recovery device 40d as in the carbon dioxide recovery facility of each of the above-described embodiments. The pretreatment device 10 of this embodiment is the same as the pretreatment device 10 of the first embodiment. On the other hand, the carbon dioxide recovery device 40d of this embodiment is a modified example of the carbon dioxide recovery device 40b of the third embodiment.

The suction machine 50x of this embodiment is also a suction machine capable of changing a suction force as in the suction machine 50x of the fourth embodiment. Further, a control device 80d of this embodiment includes a suction machine controller 83d which controls the operation of the suction machine 50x in addition to the valve controller 82b of the control device 80b of the third embodiment. However, the control device 80d of this embodiment does not include the pressure gauge 81 of the control device 80b of the third embodiment. Thus, the control device 80d of this embodiment is a device in which the pressure gauge 81 is removed from the components of the control device 80c of the fourth embodiment.

The non-recovery gas line 71b of this embodiment is the same as the non-recovery gas line 71b of the third embodiment and the fourth embodiment. That is, the non-recovery gas line 71b of this embodiment also includes the non-recovery gas discharge line 72a and the recycle line 72b. Further, the non-recovery gas valve 61b of this embodiment is the same as the non-recovery gas valve 61b of the third embodiment and the fourth embodiment. That is, the non-recovery gas valve 61b of this embodiment also includes the discharge valve 62a and the recycle valve 62b.

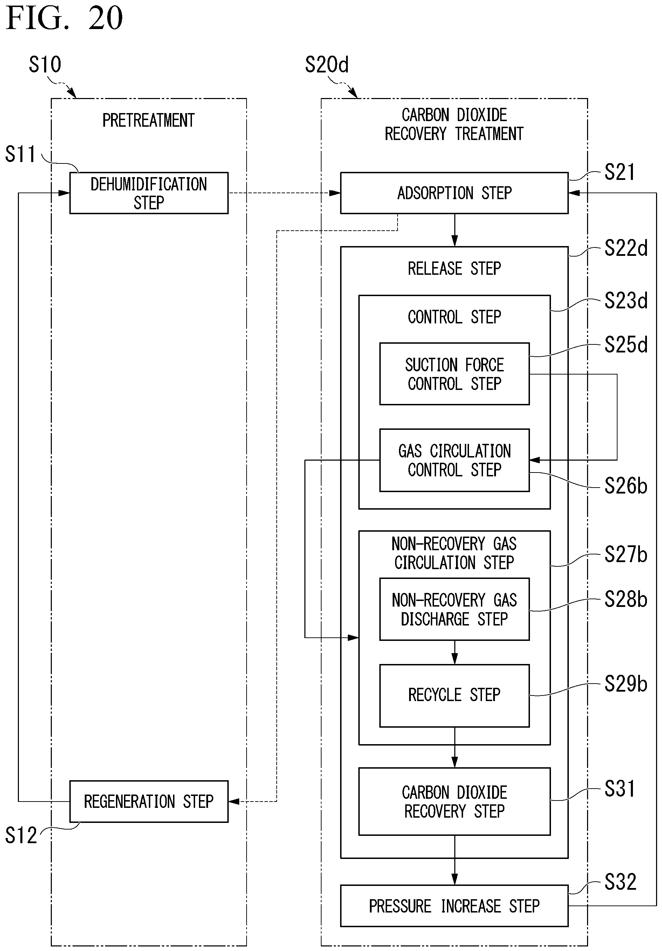

As shown in FIG. 20, the carbon dioxide recovery treatment S20d of this embodiment also includes the adsorption step S21, a release step S22d, and the pressure increase step S32 as in the carbon dioxide recovery treatment S20c of the third embodiment. The adsorption step S21 of this embodiment is the same as the adsorption step S21 of the third embodiment. Further, the pressure increase step S32 of this embodiment is the same as the pressure increase step S32 of the third embodiment. The release step S22d of this embodiment also includes a control step S23d, the non-recovery gas circulation step S27b, and the carbon dioxide recovery step S31 as in the release step S22c of the third embodiment. The control step S23d of this embodiment also includes the gas circulation control step S26b as in the control step S23b of the third embodiment. Further, the control step S23d of this embodiment includes a suction force control step S25d as in the control step S23c of the fourth embodiment. That is, the control step S23d of this embodiment includes the gas circulation control step S26b and the suction force control step S25d. Furthermore, the control step S23d of this embodiment does not include the pressure detection step S24 as not in the control steps S23b and S23c of the third embodiment and the fourth embodiment. The non-recovery gas circulation step S27b of this embodiment includes the non-recovery gas discharge step S28b and the recycle step S29b as in the non-recovery gas circulation step S27b of the third embodiment and the fourth embodiment. The carbon dioxide recovery step S31 of this embodiment is the same as the carbon dioxide recovery step S31 of the third embodiment and the fourth embodiment.

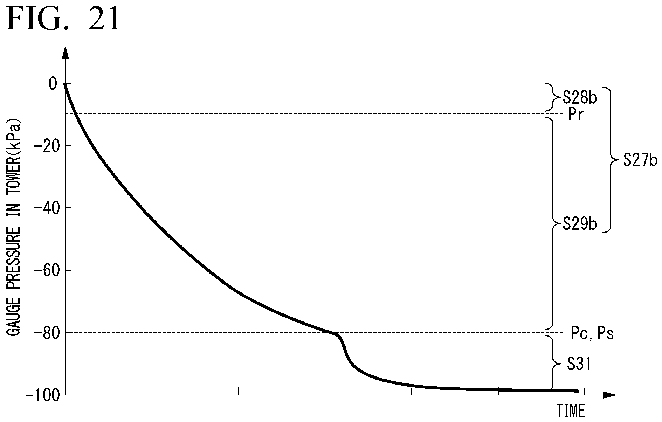

When the inside of the adsorption tower 41 is vacuum-suctioned by the suction machine 50x which is the execution target of the release step S22d, the gauge pressure in the adsorption tower 41 gradually decreases, in other words, the vacuum degree in the adsorption tower 41 gradually increases with time as shown in FIG. 21.

The control operations of the valve controller 82b and the suction machine controller 83d of this embodiment are managed based on the time from when the inside of the adsorption tower 41 which is the execution target of the release step S22d starts to be vacuum-suctioned. This time includes a first time T1 and a second time T2. As shown in FIG. 21, the first time T1 is a time at which the pressure in the adsorption tower 41 is assumed to be the recycle pressure Pr described above after the inside of the adsorption tower 41 which is the execution target of the release step S22d starts to be vacuum-suctioned. The second time T2 is a time at which the pressure in the adsorption tower 41 is assumed to be the suction force change pressure Ps described above after the inside of the adsorption tower 41 which is the execution target of the release step S22d starts to be vacuum-suctioned. Thus, the valve controller 82b and the suction machine controller 83d of this embodiment are operated as if the pressure in the adsorption tower 41 has a lower vacuum than the recycle pressure Pr until the first time T1 has elapsed. Further, the valve controller 82b and the suction machine controller 83d of this embodiment are operated as if the pressure in the adsorption tower 41 is a higher vacuum than the recycle pressure Pr and a lower vacuum than the recovery pressure Pc until the second time T2 has elapsed after the first time T1 has elapsed. Further, the valve controller 82b and the suction machine controller 83d of this embodiment are operated as if the pressure in the adsorption tower 41 has a higher vacuum than the recovery pressure Pc after the second time T2 has elapsed.

Until the first time T1 has elapsed from the start of vacuum-suction in the adsorption tower 41 which is the execution target of the release step S22d, the valve controller 82b issues an open command to the discharge valve 62a and issues a close command to the recycle valve 62b and the recovery gas valve 60 (gas circulation control step S26b). As a result, the recycle valve 62b and the recovery gas valve 60 are in a closed state, the discharge valve 62a is in an open state, and the suction gas from the suction machine 50x is discharged to the atmosphere through the non-recovery gas discharge line 72a and the discharge valve 62a (non-recovery gas discharge step S28b). That is, the non-recovery gas discharge step S28b is executed as in the third embodiment and the fourth embodiment until it is assumed that the pressure in the adsorption tower 41 which is the execution target of the release step S22d is the recycle pressure Pr.

When the second time T2 has elapsed after the start of vacuum-suction in the adsorption tower 41 which is the execution target of the release step S22d, the suction machine controller 83d instructs the suction machine 50x to increase the suction force (suction force control step S25d). As a result, the suction force of the suction machine 50x increases and as shown in FIG. 21, the pressure in the adsorption tower 41 suddenly decreases. That is, when it is assumed that the pressure in the adsorption tower 41 which is the execution target of the release step S22d is the suction force change pressure Ps, the suction force control step S25d is executed.

Until the second time T2 has elapsed and the suction force is increased after the first time T1 has elapsed from the start of vacuum-suction in the adsorption tower 41 which is the execution target of the release step S22d, the valve controller 82b issues an open command to the recycle valve 62b and issues a close command to the discharge valve 62a and the recovery gas valve 60 (gas circulation control step S26b). As a result, the discharge valve 62a and the recovery gas valve 60 are in a closed state, the recycle valve 62b is in an open state, and the suction gas from the suction machine 50x flows into the adsorption tower 41 which is the execution target of the adsorption step S21 through the recycle line 72b, the recycle valve 62b, and the main dry exhaust gas line 25 (recycle step S29b). That is, the recycle step S29b is executed as in the third embodiment and the fourth embodiment while the pressure in the adsorption tower 41 which is the execution target of the release step S22d is assumed to be a higher vacuum than the recycle pressure Pr and a lower vacuum than the recovery pressure Pc.

When the second time T2 has elapsed and the suction force is increased after the inside of the adsorption tower 41 which is the execution target of the release step S22d starts to be vacuum-suctioned, the valve controller 82b issues an open command to the recovery gas valve 60 and issues a close command to the discharge valve 62a and the recycle valve 62b (gas circulation control step S26b). As a result, the recovery gas valve 60 is in an open state, the discharge valve 62a and the recycle valve 62b are in a closed state, and the suction gas from the suction machine 50x is recovered in the recovery gas tank 63 through the carbon dioxide recovery line 70 and the recovery gas valve 60 (carbon dioxide recovery step S31). That is, when it is assumed that the pressure in the adsorption tower 41 which is the execution target of the release step S22d is the recovery pressure Pc, the carbon dioxide recovery step S31 is executed.

As described above, in this embodiment, when it is assumed that the pressure in the adsorption tower 41 is a high vacuum based on the recovery pressure Pc, the suction gas from the suction machine 50x is guided to the recovery gas tank 63. Thus, even in this embodiment, as in each of the above-described embodiments, high-concentration carbon dioxide can be recovered. Therefore, even in this embodiment, as in each of the above-described embodiments, it is possible to suppress an increase in installation area for the facility and facility cost. Further, even in this embodiment, it is possible to shorten the time required to recover carbon dioxide from the exhaust gas.

Further, even in this embodiment, since the non-recovery gas discharge step S28b and the recycle step S29b are executed as in the third embodiment, the same effect as that of the third embodiment can be obtained.

Further, in this embodiment, when the second time T2 at which the pressure is assumed to be the suction force change pressure Ps has elapsed, the suction force by the suction machine 50x is increased. After this time, as described above, the pressure in the adsorption tower 41 suddenly decreases. Therefore, in this embodiment, as in the fourth embodiment, the execution time of the carbon dioxide recovery step S31 can be shortened compared to the third embodiment.

Further, in this embodiment, since the pressure gauge 81 is not required as in the fourth embodiment, the facility cost can be reduced more than the fourth embodiment.

Furthermore, this embodiment is the modified example of the third embodiment, but the characteristic configuration of this embodiment may be applied to the first embodiment or the second embodiment. That is, the suction force of the suction machine 50x may be controlled by the suction machine controller 83d by using the suction machine 50x capable of changing the suction force as the suction machine of the first embodiment and the second embodiment.

For example, in a case in which the characteristic configuration of this embodiment is applied to the first embodiment, the non-recovery gas discharge step S28 is executed when the pressure in the adsorption tower 41 is assumed to be a lower vacuum than the recovery pressure Pc, and the carbon dioxide recovery step S31 is executed when the pressure in the adsorption tower 41 is assumed to be a higher vacuum than the recovery pressure Pc.

Further, in a case in which the characteristic configuration of this embodiment is applied to the second embodiment, the recycle step S29 is executed when the pressure in the adsorption tower 41 is assumed to be a lower vacuum than the recovery pressure Pc, and the carbon dioxide recovery step S31 is executed when the pressure in the adsorption tower 41 is assumed to be a higher vacuum than the recovery pressure Pc.

### "Modified example"

The carbon dioxide recovery facility of each of the above-described embodiments includes the pretreatment device 10. However, when the moisture content from the exhaust gas from the exhaust gas generation source 1 is extremely small, the pretreatment device 10 may be omitted. In this case, one end of the main dry exhaust gas line 25 of each of the above-described embodiments is connected to the exhaust gas generation source 1, and the main dry exhaust gas line 25 is provided with the blowing machine 16.

In each of the above-described embodiments, a porous structure adsorbing material is used as the carbon dioxide adsorbing material 45 of the adsorption tower 41. However, the carbon dioxide adsorbing material may be in the form of a number of small-diameter (for example, 0.1 mm to 5.0 mm) spheres (beads), a number of pellets having a small maximum dimension (for example, 0.1 mm to 5.0 mm), or a powder. However, when a large number of spheres, pellets, or powder are used as the carbon dioxide adsorbing material, they may become fluidized by the flow in the adsorption tower 41 and may flow out of the adsorption tower 41. On the other hand, in a case in which these carbon dioxide adsorbing materials are used, even if the exhaust gas is sent into the adsorption tower 41 when the inside of the adsorption tower 41 is at a high vacuum, the exhaust gas does not pass through the gaps between the numerous carbon dioxide adsorbing materials. Therefore, when these carbon dioxide adsorbing materials are used, the pressure increase step after the release step may be omitted.

The recovery pressure Pc of each of the above-described embodiments is -80 kPaG. However, the recovery pressure Pc may be any value between -75 and -95 kPaG depending on the desired carbon dioxide concentration in the suction gas.

Although the embodiments of the present disclosure have been described in detail above, the present disclosure is not limited to the above-described embodiments. Various additions, modifications, substitutions, partial deletions, and the like are possible within the scope of the concept and spirit of the present disclosure derived from the contents defined in the claims and their equivalents.

### "Appendix"

The carbon dioxide recovery facilities in the above-described embodiments and modified examples can be understood, for example, as follows.
(1) The carbon dioxide recovery facility of Aspect 1 is a carbon dioxide recovery facility capable of recovering carbon dioxide from an exhaust gas containing at least nitrogen and carbon dioxide, including: the adsorption tower 41 which is filled with the carbon dioxide adsorbing material 45 made of a carbon dioxide adsorbent capable of adsorbing carbon dioxide under high pressure and discharging carbon dioxide under lower pressure; the blowing machine 16 which sends the exhaust gas into the adsorption tower 41; the suction machines 50 and 50x which vacuum-suction the inside of the adsorption tower 41; the discharge line 68 which is connected to the discharge ports of the suction machines 50 and 50x; the carbon dioxide recovery line 70 which is connected to the discharge line 68; the recovery gas valve 60 which is provided in the carbon dioxide recovery line 70; the non-recovery gas line 71 which is connected to the discharge line 68; the non-recovery gas valves 61, 61a, and 61b which are provided in the non-recovery gas line 71; and the control devices 80, 80a, 80b, 80c, and 80d which close the recovery gas valve 60 and open the non-recovery gas valves 61, 61a, and 61b when the pressure in the adsorption tower 41 is a low vacuum based on the predetermined recovery pressure Pc or is assumed to be a low vacuum and close the non-recovery gas valves 61, 61a, and 61b and open the recovery gas valve 60 when the pressure in the adsorption tower 41 is a high vacuum based on the recovery pressure Pc or is assumed to be a high vacuum.

The inventor vacuum-suctioned the inside of the adsorption tower 41 and analyzed the gas components in the suction gas according to the pressure in the adsorption tower 41 at that time. Through this analysis, the inventor discovered the following phenomenon. When the vacuum degree in the adsorption tower 41 is low, the nitrogen concentration in the suction gas is high and the carbon dioxide concentration in the suction gas is low. When the vacuum degree in the adsorption tower 41 is increased, the nitrogen concentration in the suction gas gradually decreases and the carbon dioxide concentration in the suction gas gradually increases. This phenomenon is believed to be due to the fact that the adsorption force of carbon dioxide to the carbon dioxide adsorbing material 45 is higher than the adsorption force of nitrogen to the carbon dioxide adsorbing material 45.

Based on the above phenomenon, the inventor has conceived of the carbon dioxide capture equipment in Aspect 1. In this aspect, when the pressure in the adsorption tower 41 is a low vacuum based on the predetermined recovery pressure Pc or is assumed to be a low vacuum, the suction gas is not recovered in a tank or the like, and when the pressure in the adsorption tower 41 is a high vacuum based on the recovery pressure Pc or is assumed to be a high vacuum, the suction gas is recovered in a tank or the like. Therefore, in this aspect, high-concentration carbon dioxide can be recovered.

Further, in this aspect, since high-concentration carbon dioxide can be recovered as described above without providing a first-stage adsorption tower and a second-stage adsorption tower as in the facility described in Non-Patent Document 1, the number of devices that constitute the facility can be reduced. Thus, in this aspect, it is possible to suppress an increase in installation area for the facility and facility cost.

Further, in this aspect, since high-concentration carbon dioxide can be recovered without executing the adsorption step in two stages, it is possible to shorten the time required to recover carbon dioxide from the exhaust gas.

(2) According to the carbon dioxide recovery facility of Aspect 2, in the carbon dioxide recovery facility of Aspect 1, the control devices 80, 80a, 80b, and 80c include the pressure gauge 81 capable of detecting the pressure in the adsorption tower 41 and the valve controllers 82, 82a, and 82b which control the opening and closing of the recovery gas valve 60 and the non-recovery gas valves 61, 61a, and 61b based on the pressure detected by the pressure gauge 81.

(3) According to the carbon dioxide recovery facility of Aspect 3, in the carbon dioxide recovery facility of Aspect 2, the control device 80c includes the suction machine controller 83 which controls the operation of the suction machine 50x based on the pressure detected by the pressure gauge 81. The suction machine controller 83 operates the suction machine 50x so that the suction force of the suction machine 50x increases when the pressure detected by the pressure gauge 81 is a pressure higher than the recovery pressure Pc and closer to the recovery pressure Pc than the atmospheric pressure or the suction force change pressure Ps as the recovery pressure Pc.

In this aspect, when the pressure in the adsorption tower 41 is the suction force change pressure Ps, the suction force of the suction machine 50x increases. Therefore, in this aspect, the pressure in the adsorption tower 41 suddenly decreases from this time. Thus, in this aspect, since the pressure in the adsorption tower 41 suddenly decreases at the start of the carbon dioxide recovery step S31, the execution time of the carbon dioxide recovery step S31 can be shortened.

(4) According to the carbon dioxide recovery facility of Aspect 4, in the carbon dioxide recovery facility of Aspect 1, the control device 80d includes the suction machine controller 83d which controls the operation of the suction machine 50x and the valve controller 82b which controls the opening and closing of the recovery gas valve 60 and the non-recovery gas valve 61b. The suction machine controller 83d operates the suction machine 50x so that the suction force of the suction machine 50x increases when a predetermined time T2 has elapsed after the inside of the adsorption tower 41 is vacuum-suctioned by the suction machine 50x. The valve controller 82b closes the recovery gas valve 60 and opens the non-recovery gas valve 61b by assuming that the pressure in the adsorption tower 41 is a lower vacuum than the recovery pressure Pc before the suction machine controller 83d increases the suction force of the suction machine 50x and closes the non-recovery gas valve 61b and opens the recovery gas valve 60 by assuming that the pressure in the adsorption tower 41 is a higher vacuum than the recovery pressure Pc after the suction machine controller 83d increases the suction force of the suction machine 50x.

In this aspect, when the predetermined time T2 has elapsed after the inside of the adsorption tower 41 is vacuum-suctioned by the suction machine 50x, the suction force of the suction machine 50x increases. Therefore, in this aspect, the pressure in the adsorption tower 41 suddenly decreases from this time. Thus, in this aspect, since the pressure in the adsorption tower 41 can be suddenly decreased at the start of the carbon dioxide recovery step S31 as in Aspect 3, the execution time of the carbon dioxide recovery step S31 can be shortened.

(5) According to the carbon dioxide recovery facility of Aspect 5, in the carbon dioxide recovery facility of any one of Aspects 1 to 4, the non-recovery gas line 71 includes the non-recovery gas discharge line 72a having an open end. The non-recovery gas valve 61 includes the discharge valve 62a provided in the non-recovery gas discharge line 72a. The control devices 80, 80b, 80c, and 80d open the discharge valve 62a when the pressure in the adsorption tower 41 is a low vacuum based on the recovery pressure Pc or is assumed to be a low vacuum and close the discharge valve 62a when the pressure in the adsorption tower 41 is a high vacuum based on the recovery pressure Pc or is assumed to be a high vacuum.

In this aspect, when the pressure in the adsorption tower 41 is a low vacuum based on the recovery pressure Pc or is assumed to be a low vacuum, the discharge valve 62a is opened, and the suction gas suctioned by the suction machines 50 and 50x is discharged to the atmosphere through the non-recovery gas discharge line 72a and the discharge valve 62a. Further, in this aspect, when the pressure in the adsorption tower 41 is a high vacuum based on the recovery pressure Pc or is assumed to be a high vacuum, the discharge valve 62a is closed, the recovery gas valve 60 is opened, and the suction gas is recovered in a tank or the like through the carbon dioxide recovery line 70 and the recovery gas valve 60.

(6) According to the carbon dioxide recovery facility of Aspect 6, the carbon dioxide recovery facility of any one of Aspects 1 to 4 further includes: the pretreatment device 10 capable of removing moisture contained in the exhaust gas. The pretreatment device 10 includes the dehumidification tower 11 capable of removing moisture contained in the exhaust gas from the blowing machine 16 and the dry exhaust gas line 23 which guides a dry exhaust gas as the exhaust gas having passed through the dehumidification tower 11 to the adsorption tower 41. The non-recovery gas line 71 includes the recycle line 72b which is connected to the dry exhaust gas line 23. The non-recovery gas valve 61a includes the recycle valve 62b which is provided in the recycle line 72b. The control devices 80a, 80b, 80c, and 80d open the recycle valve 62b when the pressure in the adsorption tower 41 is a lower vacuum than the recovery pressure Pc or is assumed to be a low vacuum and closes the recycle valve 62b when the pressure in the adsorption tower 41 is a higher vacuum than the recovery pressure Pc or is assumed to be a high vacuum.

In this aspect, when the pressure in the adsorption tower 41 is a low vacuum based on the recovery pressure Pc or is assumed to be a low vacuum, the recycle valve 62b is opened, and the suction gas suctioned by the suction machines 50 and 50x is sent to the adsorption tower 41 in the carbon dioxide adsorption step S21 through the recycle line 72b, the recycle valve 62b, and the dry exhaust gas line 23. Further, in this aspect, when the pressure in the adsorption tower 41 is a high vacuum based on the recovery pressure Pc or is assumed to be a high vacuum, the recycle valve 62b is closed, the recovery gas valve 60 is opened, and the suction gas is recovered in a tank or the like through the carbon dioxide recovery line 70 and the recovery gas valve 60. Even when the pressure in the adsorption tower 41 is a low vacuum based on the recovery pressure Pc or is assumed to be a low vacuum, carbon dioxide is contained in the suction gas. In this aspect, when the pressure in the adsorption tower 41 is a low vacuum based on the recovery pressure Pc or is assumed to be a low vacuum, the suction gas is not discharged to the atmosphere and the suction gas is sent to the adsorption tower 41 in the carbon dioxide adsorption step S21. Thus, in this aspect, the carbon dioxide discharge amount can be reduced.

(7) According to the carbon dioxide recovery facility of Aspect 7, the carbon dioxide recovery facility of any one of Aspects 1 to 4 further includes: the pretreatment device 10 capable of removing moisture contained in the exhaust gas. The pretreatment device 10 includes the dehumidification tower 11 capable of removing moisture contained in the exhaust gas from the blowing machine 16 and the dry exhaust gas line 23 which guides a dry exhaust gas as the exhaust gas having passed through the dehumidification tower 11 to the adsorption tower 41. The non-recovery gas line 71b includes the non-recovery gas discharge line 72a having an open end and the recycle line 72b connected to the dry exhaust gas line 23. The non-recovery gas valve 61b includes the discharge valve 62a which is provided in the non-recovery gas discharge line 72a and the recycle valve 62b which is provided in the recycle line 72b. The control devices 80b, 80c, and 80d open the discharge valve 62a and close the recycle valve 62b when the pressure in the adsorption tower 41 is a lower vacuum than the recovery pressure Pc or a lower vacuum than the recycle pressure Pr closer to the atmospheric pressure than the recovery pressure Pc or is assumed to be a lower vacuum than the recycle pressure Pr. The control devices 80b, 80c, and 80d close the discharge valve 62a and open the recycle valve 62b when the pressure in the adsorption tower 41 is a lower vacuum than the recovery pressure Pc and a higher vacuum than the recycle pressure Pr or is assumed to be a lower vacuum than the recovery pressure Pc and a higher vacuum than the recycle pressure Pr. The control devices 80b, 80c, and 80d close the discharge valve 62a and the recycle valve 62b when the pressure in the adsorption tower 41 is a higher vacuum than the recovery pressure Pc or is assumed to be a high vacuum.

In this aspect, when the pressure in the adsorption tower 41 is a low vacuum based on the recycle pressure Pr or is assumed to be a lower vacuum than the recycle pressure Pr, the discharge valve 62a is opened and the recycle valve 62b is closed so that the suction gas adsorbed by the suction machines 50 and 50x is discharged to the atmosphere through the non-recovery gas discharge line 72a and the discharge valve 62a. Further, in this aspect, when the pressure in the adsorption tower 41 is a lower vacuum than the recovery pressure Pc and a higher vacuum than the recycle pressure Pr or is assumed to be a lower vacuum than the recovery pressure Pc and a higher vacuum than the recycle pressure Pr, the discharge valve 62a is closed and the recycle valve 62b is opened so that the suction gas suctioned by the suction machines 50 and 50x is sent to the adsorption tower 41 in the carbon dioxide adsorption step S21 through the recycle line 72b, the recycle valve 62b, and the dry exhaust gas line 23. Further, in this aspect, when the pressure in the adsorption tower 41 is a high vacuum based on the recovery pressure Pc or is assumed to be a high vacuum, the discharge valve 62a and the recycle valve 62b are closed, the recovery gas valve 60 is opened, and the suction gas is recovered in a tank or the like through the carbon dioxide recovery line 70 and the recovery gas valve 60.

Even when the pressure in the adsorption tower 41 is a low vacuum based on the recovery pressure Pc or is assumed to be a low vacuum, carbon dioxide is contained in the suction gas. In this aspect, when the pressure in the adsorption tower 41 is a lower vacuum than the recovery pressure Pc and a higher vacuum than the recycle pressure Pr or is assumed to a lower vacuum than the recovery pressure Pc and a higher vacuum than the recycle pressure Pr, the suction gas is not discharged to the atmosphere, and the suction gas is sent to the adsorption tower 41 in the carbon dioxide adsorption step S21. Thus, in this aspect, the carbon dioxide discharge amount can be reduced. Further, in this aspect, the carbon dioxide concentration in the gas sent to the adsorption tower 41 in the carbon dioxide adsorption step S21 through the recycle line 72b is lower than the carbon dioxide concentration in the gas recovered in a tank or the like, but is higher than the carbon dioxide concentration in the gas discharged to the atmosphere. Thus, a gas having high carbon dioxide concentration is sent into the adsorption tower 41 in the carbon dioxide adsorption step S21. Therefore, in this aspect, the adsorption rate of carbon dioxide by the carbon dioxide adsorbing material 45 in the adsorption tower 41 in the carbon dioxide adsorption step S21 can be increased.

(8) According to the carbon dioxide recovery facility of Aspect 8, in the carbon dioxide recovery facility of any one of Aspects 1 to 7, the carbon dioxide adsorbent is zeolite.

(9) According to the carbon dioxide recovery facility of Aspect 9, in the carbon dioxide recovery facility of Aspect 8, the recovery pressure Pc is -75 to -95 kPaG.

(10) According to the carbon dioxide recovery facility of Aspect 10, in the carbon dioxide recovery facility of any one of Aspects 1 to 9, the carbon dioxide adsorbing material 45 is a porous structure having the plurality of through-holes 46 penetrating in the same direction.

In this aspect, since the carbon dioxide adsorbing material 45 has a porous structure, the gas flow in the adsorption tower 41 does not cause fluidization, and the outflow of the carbon dioxide adsorbing material 45 from the adsorption tower 41 can be prevented.

The carbon dioxide recovery methods in the above-described embodiments and modified examples can be understood, for example, as follows.

(11) The carbon dioxide recovery method of Aspect 11 is a carbon dioxide recovery method of recovering carbon dioxide from an exhaust gas containing at least nitrogen and carbon dioxide, executing: the adsorption step S21 of flowing the exhaust gas into the adsorption tower 41, filled with the carbon dioxide adsorbing material 45 made of the carbon dioxide adsorbent capable of adsorbing carbon dioxide under high pressure and discharging carbon dioxide under low pressure, so that the carbon dioxide in the exhaust gas is adsorbed by the carbon dioxide adsorbent; and the release steps S22, S22a, S22b, S22c, and S22d of vacuum-suctioning the inside of the adsorption tower 41 so that the carbon dioxide adsorbed by the carbon dioxide adsorbent is released from the carbon dioxide adsorbent. The release steps S22, S22a, S22b, S22c, and S22d include the carbon dioxide recovery step S31 of guiding a gas from the adsorption tower 41 to the recovery gas tank 63 as a recovery gas, the non-recovery gas circulation steps S27, S27a, and S27b of guiding a gas from the adsorption tower 41 to a location other than the recovery gas tank 63 as a non-recovery gas, and the control steps S23, S23a, S23b, S23c, and S23d of controlling the execution of the carbon dioxide recovery step S31 and the non-recovery gas circulation steps S27, S27a, and S27b. In the control steps S23, S23a, S23b, S23c, and S23d, when the pressure in the adsorption tower 41 is a high vacuum based on a predetermined recovery pressure Pc or is assumed to be a high vacuum, the carbon dioxide recovery step S31 is executed, and when the pressure in the adsorption tower 41 is a low vacuum based on the recovery pressure Pc or is assumed to be a low vacuum, the non-recovery gas circulation steps S27, S27a, and S27b are executed.

In this aspect, the same effect as that of the carbon dioxide recovery facility of Aspect 1 can be obtained. That is, even in this aspect, high-concentration carbon dioxide can be recovered without providing the first-stage adsorption tower and the second-stage adsorption tower as in the facility described in Non-Patent Document 1. Further, even in this aspect, it is possible to shorten the time required to recover carbon dioxide from the exhaust gas.

(12) According to the carbon dioxide recovery method of Aspect 12, in the carbon dioxide recovery method of Aspect 11, the control steps S23, S23a, S23b, and S23c include the pressure detection step S24 of detecting the pressure in the adsorption tower 41 and the gas circulation control steps S26, S26a, and S26b of executing one step of the carbon dioxide recovery step S31 and the non-recovery gas circulation steps S27, S27a, and S27b based on the pressure detected by the pressure detection step S24.

(13) According to the carbon dioxide recovery method of Aspect 13, in the carbon dioxide recovery method of Aspect 12, the control step S23c includes the suction force control step S25 of controlling the suction force for vacuum-suctioning the inside of the adsorption tower 41. In the suction force control step S25, when the pressure detected by the pressure detection step S24 is a pressure higher than the recovery pressure Pc and closer to the recovery pressure Pc than the atmospheric pressure or is the suction force change pressure Ps as the recovery pressure Pc, the suction force is increased.

In this aspect, the execution time of the carbon dioxide recovery step S31 can be shortened as in the carbon dioxide recovery facility of Aspect 3.

(14) According to the carbon dioxide recovery method of Aspect 14, in the carbon dioxide recovery method of Aspect 11, the control step S23d includes the suction force control step S25d of controlling the suction force for vacuum-suctioning the inside of the adsorption tower 41 and the gas circulation control step S26b of executing one step of the carbon dioxide recovery step S31 and the non-recovery gas circulation step S27. In the suction force control step S25d, when a predetermined time T2 has elapsed after the inside of the adsorption tower 41 starts to be vacuum-suctioned, the suction force is increased. In the gas circulation control step S26b, the non-recovery gas circulation step S27 is executed by assuming that the pressure in the adsorption tower 41 is a lower vacuum than the recovery pressure Pc before the suction force is increased by the suction force control step S25d, and the carbon dioxide recovery step S31 is executed by assuming that the pressure in the adsorption tower 41 is a higher vacuum than the recovery pressure Pc after the suction force is increased by the suction force control step S25d.

In this aspect, the execution time of the carbon dioxide recovery step S31 can be shortened as in the carbon dioxide recovery facility of Aspect 4.

(15) According to the carbon dioxide recovery method of Aspect 15, in the carbon dioxide recovery method of any one of Aspects 11 to 14, the non-recovery gas circulation steps S27 and S27b include the non-recovery gas discharge steps S28 and S28b of discharging the non-recovery gas to the atmosphere. In the control steps S23, S23b, S23c, and S23d, when the pressure in the adsorption tower 41 is a low vacuum based on the recovery pressure Pc or is assumed to be a low vacuum, the non-recovery gas discharge steps S28 and S28b are executed, and when the pressure in the adsorption tower 41 is a high vacuum based on the recovery pressure Pc or is assumed to be a high vacuum, the non-recovery gas discharge steps S28 and S28b are not executed.

In this aspect, the same effect as that of the carbon dioxide recovery facility of Aspect 5 can be obtained.

(16) According to the carbon dioxide recovery method of Aspect 16, the carbon dioxide recovery method of any one of Aspects 11 to 14 further executes the pretreatment S 10 of removing moisture contained in the exhaust gas. The pretreatment S10 includes the dehumidification step S11 of sending the exhaust gas into the dehumidification tower 11, removing moisture in the exhaust gas, and guiding a dry exhaust gas as the exhaust gas having passed through the dehumidification tower 11 to the adsorption tower 41. The non-recovery gas circulation steps S27a and S27b include the recycle steps S29 and S29b of mixing the non-recovery gas into the dry exhaust gas. In the control steps S23a, S23b, S23c, and S23d, when the pressure in the adsorption tower 41 is a low vacuum based on the recovery pressure Pc or is assumed to be a low vacuum, the recycle steps S29 and S29b are executed, and when the pressure in the adsorption tower 41 is a high vacuum based on the recovery pressure Pc or is assumed to be a high vacuum, the recycle steps S29 and S29b are not executed.

In this aspect, the carbon dioxide discharge amount can be reduced as in the carbon dioxide recovery facility of Aspect 6.

(17) According to the carbon dioxide recovery method of Aspect 17, the carbon dioxide recovery method of any one of Aspects 11 to 14 further executes the pretreatment S10 that removes moisture contained in an exhaust gas. The pretreatment S10 includes the dehumidification step S11 of sending the exhaust gas into the dehumidification tower 11, removing moisture in the exhaust gas, and guiding a dry exhaust gas as the exhaust gas having passed through the dehumidification tower 11 to the adsorption tower 41. The non-recovery gas circulation steps S27b, S27c, and S27d include the non-recovery gas discharge step S28b of discharging the non-recovery gas to the atmosphere and the recycle step S29b of mixing the non-recovery gas into the dry exhaust gas. In the control steps S23b, S23c, and S23d, when the pressure in the adsorption tower 41 is a lower vacuum than the recovery pressure Pc and a lower vacuum than the recycle pressure Pr closer to the atmospheric pressure than the recovery pressure Pc or is assumed to be a lower vacuum than the recycle pressure Pr, the non-recovery gas discharge step S28b is executed and the recycle step S29b is not executed. In the control steps S23b, S23c, and S23d, when the pressure in the adsorption tower 41 is a lower vacuum than the recovery pressure Pc and a higher vacuum than the recycle pressure Pr or is assumed to be a lower vacuum than the recovery pressure Pc and a higher vacuum than the recycle pressure Pr, the non-recovery gas discharge step S28b is not executed and the recycle step S29b is executed. In the control steps S23b, S23c, and S23d, when the pressure in the adsorption tower 41 is a higher vacuum than the recovery pressure Pc or is assumed to be a high vacuum, the non-recovery gas discharge step S28b and the recycle step S29b are not executed.

In this aspect, the carbon dioxide discharge amount can be reduced as in the carbon dioxide recovery facility of Aspect 7. Further, in this aspect, the adsorption rate of carbon dioxide by the carbon dioxide adsorbing material 45 in the adsorption tower 41 in the carbon dioxide adsorption step S21 can be increased.

(18) According to the carbon dioxide recovery method of Aspect 18, in the carbon dioxide recovery method of any one of Aspects 11 to 17, zeolite is used as the carbon dioxide adsorbent.

(19) According to the carbon dioxide recovery method of Aspect 19, in the carbon dioxide recovery method of Aspect 18, the recovery pressure Pc is -75 to -95 kPaG.

### INDUSTRIAL APPLICABILITY

According to an aspect of the present disclosure, it is possible to suppress an increase in installation area for the facility and facility cost while recovering high-concentration carbon dioxide from an exhaust gas.

### REFERENCE SIGNS LIST

1: Exhaust gas generation source
10: Pretreatment device
11: Dehumidification tower
11a: First dehumidification tower
11b: Second dehumidification tower
12: Container
13: First port
14: Second port
15: Moisture adsorbing material
16: Blowing machine
17: Dehumidification vacuum pump
20: Exhaust gas line
21: Main exhaust gas line
22a: First exhaust gas line
22b: Second exhaust gas line
23: Dry exhaust gas line
24a: Dehumidification side first dry exhaust gas line
24b: Dehumidification side second dry exhaust gas line
25: Main dry exhaust gas line
26a: Recovery side first dry exhaust gas line
26b: Recovery side second dry exhaust gas line
26c: Recovery side third dry exhaust gas line
27: Moisture-rich gas line
28a: First moisture-rich gas line
28b: Second moisture-rich gas line
29: Main moisture-rich gas line
30: Off-gas line
31a: Recovery side first off-gas line
31b: Recovery side second off-gas line
31c: Recovery side third off-gas line
32: Main off-gas line
33a: Dehumidification side first off-gas line
33b: Dehumidification side second off-gas line
35a: First exhaust gas valve
35b: Second exhaust gas valve
36a: Dehumidification side first dry exhaust gas valve
36b: Dehumidification side second dry exhaust gas valve
37a: First moisture-rich gas valve
37b: Second moisture-rich gas valve
38a: Dehumidification side first off-gas valve
38b: Dehumidification side second off-gas valve
40, 40a, 40b, 40c, 40d: Carbon dioxide recovery device
41: Adsorption tower
41a: First adsorption tower
41b: Second adsorption tower
41c: Third adsorption tower
42: Container
43: First port
44: Second port
45: Carbon dioxide adsorbing material
46: Through-hole
50, 50x, 50xa, 50xb: Suction machine
51: Suction machine body
51a: First suction machine body
51b: Second suction machine body
52: Motor
52a: First motor
52b: Second motor
53: Inverter
54a: First switch
54b: Second switch
56a: Recovery side first dry exhaust gas valve
56b: Recovery side second dry exhaust gas valve
56c: Recovery side third dry exhaust gas valve
57a: First suction valve
57b: Second suction valve
57c: Third suction valve
58a: Recovery side first off-gas valve
58b: Recovery side second off-gas valve
58c: Recovery side third off-gas valve
60: Recovery gas valve
61, 61a, 61b: Non-recovery gas valve
62a: Discharge valve
62b: Recycle valve
63: Recovery gas tank
65: Suction line
66a: First suction line
66b: Second suction line
66c: Third suction line
67: Main suction line
68: Discharge line
70: Carbon dioxide recovery line
71, 71a, 71b: Non-recovery gas line
72a: Non-recovery gas discharge line
72b: Recycle line
80, 80a, 80b, 80c, 80d: Control device
81: Pressure gauge
82, 82a, 82b: Valve controller
83, 83d: Suction machine controller

## Claims

1. A carbon dioxide recovery facility capable of recovering carbon dioxide from an exhaust gas containing at least nitrogen and carbon dioxide, comprising:
an adsorption tower which is filled with a carbon dioxide adsorbing material made of a carbon dioxide adsorbent capable of adsorbing carbon dioxide under high pressure and discharging carbon dioxide under lower pressure;
a blowing machine which sends the exhaust gas into the adsorption tower;
a suction machine which vacuum-suctions the inside of the adsorption tower;
a discharge line which is connected to a discharge port of the suction machine;
a carbon dioxide recovery line which is connected to the discharge line;
a recovery gas valve which is provided in the carbon dioxide recovery line;
a non-recovery gas line which is connected to the discharge line;
a non-recovery gas valve which is provided in the non-recovery gas line; and
a control device which closes the recovery gas valve and opens the non-recovery gas valve when the pressure in the adsorption tower is a low vacuum based on a predetermined recovery pressure or is assumed to be a low vacuum and closes the non-recovery gas valve and opens the recovery gas valve when the pressure in the adsorption tower is a high vacuum based on the recovery pressure or is assumed to be a high vacuum.

2. The carbon dioxide recovery facility according to claim 1,
wherein the control device includes a pressure gauge capable of detecting the pressure in the adsorption tower and a valve controller which controls the opening and closing of the recovery gas valve and the non-recovery gas valve based on the pressure detected by the pressure gauge.

3. The carbon dioxide recovery facility according to claim 2,
wherein the control device includes a suction machine controller which controls the operation of the suction machine based on the pressure detected by the pressure gauge, and
wherein the suction machine controller operates the suction machine so that a suction force of the suction machine increases when the pressure detected by the pressure gauge is a pressure higher than the recovery pressure and closer to the recovery pressure than an atmospheric pressure or a suction force change pressure as the recovery pressure.

4. The carbon dioxide recovery facility according to claim 1,
wherein the control device includes a suction machine controller which controls the operation of the suction machine and a valve controller which controls the opening and closing of the recovery gas valve and the non-recovery gas valve,
wherein the suction machine controller operates the suction machine so that the suction force of the suction machine increases when a predetermined time has elapsed after the inside of the adsorption tower is vacuum-suctioned by the suction machine, and
wherein the valve controller closes the recovery gas valve and opens the non-recovery gas valve by assuming that the pressure in the adsorption tower is a lower vacuum than the recovery pressure before the suction machine controller increases the suction force of the suction machine and closes the non-recovery gas valve and opens the recovery gas valve by assuming that the pressure in the adsorption tower is a higher vacuum than the recovery pressure after the suction machine controller increases the suction force of the suction machine.

5. The carbon dioxide recovery facility according to any one of claims 1 to 4,
wherein the non-recovery gas line includes a non-recovery gas discharge line having an open end,
wherein the non-recovery gas valve includes a discharge valve provided in the non-recovery gas discharge line, and
wherein the control device opens the discharge valve when the pressure in the adsorption tower is a low vacuum based on the recovery pressure or is assumed to be a low vacuum and closes the discharge valve when the pressure in the adsorption tower is a high vacuum based on the recovery pressure or is assumed to be a high vacuum.

6. The carbon dioxide recovery facility according to any one of claims 1 to 4, further comprising:
a pretreatment device capable of removing moisture contained in the exhaust gas,
wherein the pretreatment device includes a dehumidification tower capable of removing moisture contained in the exhaust gas from the blowing machine and a dry exhaust gas line which guides a dry exhaust gas as the exhaust gas having passed through the dehumidification tower to the adsorption tower,
wherein the non-recovery gas line includes a recycle line which is connected to the dry exhaust gas line,
wherein the non-recovery gas valve includes a recycle valve which is provided in the recycle line, and
wherein the control device opens the recycle valve when the pressure in the adsorption tower is a lower vacuum than the recovery pressure or is assumed to be a low vacuum and closes the recycle valve when the pressure in the adsorption tower is a higher vacuum than the recovery pressure or is assumed to be a high vacuum.

7. The carbon dioxide recovery facility according to any one of claims 1 to 4, further comprising:
a pretreatment device capable of removing moisture contained in the exhaust gas,
wherein the pretreatment device includes a dehumidification tower capable of removing moisture contained in the exhaust gas from the blowing machine and a dry exhaust gas line which guides a dry exhaust gas as the exhaust gas having passed through the dehumidification tower to the adsorption tower,
wherein the non-recovery gas line includes a non-recovery gas discharge line having an open end and a recycle line connected to the dry exhaust gas line,
wherein the non-recovery gas valve includes a discharge valve provided in the non-recovery gas discharge line and a recycle valve provided in the recycle line, and
wherein the control device opens the discharge valve and closes the recycle valve when the pressure in the adsorption tower is a lower vacuum than the recovery pressure and a lower vacuum than a recycle pressure closer to an atmospheric pressure than the recovery pressure or is assumed to be a lower vacuum than the recycle pressure, closes the discharge valve and opens the recycle valve when the pressure in the adsorption tower is a lower vacuum than the recovery pressure and a higher vacuum than the recycle pressure or is assumed to be a lower vacuum than the recovery pressure and a higher vacuum than the recycle pressure, and closes the discharge valve and the recycle valve when the pressure in the adsorption tower is a higher vacuum than the recovery pressure or is assumed to be a high vacuum.

8. The carbon dioxide recovery facility according to any one of claims 1 to 4,
wherein the carbon dioxide adsorbent is zeolite.

9. The carbon dioxide recovery facility according to claim 8,
wherein the recovery pressure is -75 to -95 kPaG.

10. The carbon dioxide recovery facility according to any one of claims 1 to 4,
wherein the carbon dioxide adsorbing material is a porous structure having a plurality of through-holes penetrating in the same direction.

11. A carbon dioxide recovery method of recovering carbon dioxide from an exhaust gas containing at least nitrogen and carbon dioxide, executing:
an adsorption step of flowing the exhaust gas into an adsorption tower, filled with a carbon dioxide adsorbing material made of a carbon dioxide adsorbent capable of adsorbing carbon dioxide under high pressure and discharging carbon dioxide under low pressure, so that the carbon dioxide in the exhaust gas is adsorbed by the carbon dioxide adsorbent; and
a release step of vacuum-suctioning the inside of the adsorption tower so that the carbon dioxide adsorbed by the carbon dioxide adsorbent is released from the carbon dioxide adsorbent,
wherein the release step includes a carbon dioxide recovery step of guiding a gas from the adsorption tower to a recovery gas tank as a recovery gas, a non-recovery gas circulation step of guiding a gas from the adsorption tower to a location other than the recovery gas tank as a non-recovery gas, and a control step of controlling the execution of the carbon dioxide recovery step and the non-recovery gas circulation step, and
wherein in the control step, when the pressure in the adsorption tower is a high vacuum based on a predetermined recovery pressure or is assumed to be a high vacuum, the carbon dioxide recovery step is executed, and when the pressure in the adsorption tower is a low vacuum based on the recovery pressure or is assumed to be a low vacuum, the non-recovery gas circulation step is executed.

12. The carbon dioxide recovery method according to claim 11,
wherein the control step includes a pressure detection step of detecting the pressure in the adsorption tower and a gas circulation control step of executing one step of the carbon dioxide recovery step and the non-recovery gas circulation step based on the pressure detected by the pressure detection step.

13. The carbon dioxide recovery method according to claim 12,
wherein the control step includes a suction force control step of controlling a suction force for vacuum-suctioning the inside of the adsorption tower, and
wherein in the suction force control step, when the pressure detected by the pressure detection step is a pressure higher than the recovery pressure and closer to the recovery pressure than an atmospheric pressure or a suction force change pressure as the recovery pressure, the suction force is increased.

14. The carbon dioxide recovery method according to claim 11,
wherein the control step includes a suction force control step of controlling a suction force for vacuum-suctioning the inside of the adsorption tower and a gas circulation control step of executing one step of the carbon dioxide recovery step and the non-recovery gas circulation step,
wherein in the suction force control step, when a predetermined time has elapsed after the inside of the adsorption tower starts to be vacuum-suctioned, the suction force is increased, and
wherein in the gas circulation control step, the non-recovery gas circulation step is executed by assuming that the pressure in the adsorption tower is a lower vacuum than the recovery pressure before the suction force is increased by the suction force control step, and the carbon dioxide recovery step is executed by assuming that the pressure in the adsorption tower is a higher vacuum than the recovery pressure after the suction force is increased by the suction force control step.

15. The carbon dioxide recovery method according to any one of claims 11 to 14, wherein the non-recovery gas circulation step includes a non-recovery gas discharge step of discharging the non-recovery gas to the atmosphere, and
wherein in the control step, when the pressure in the adsorption tower is a low vacuum based on the recovery pressure or is assumed to be a low vacuum, the non-recovery gas discharge step is executed, and when the pressure in the adsorption tower is a high vacuum based on the recovery pressure or is assumed to be a high vacuum, the non-recovery gas discharge step is not executed.

16. The carbon dioxide recovery method according to any one of claims 11 to 14, further executing:
a pretreatment that removes moisture contained in the exhaust gas,
wherein the pretreatment includes a dehumidification step of sending the exhaust gas into the dehumidification tower, removing moisture in the exhaust gas, and guiding a dry exhaust gas as the exhaust gas having passed through the dehumidification tower to the adsorption tower,
wherein the non-recovery gas circulation step includes a recycle step of mixing the non-recovery gas into the dry exhaust gas, and
wherein in the control step, when the pressure in the adsorption tower is a low vacuum based on the recovery pressure or is assumed to a low vacuum, the recycle step is executed, and when the pressure in the adsorption tower is a high vacuum based on the recovery pressure or is assumed to be a high vacuum, the recycle step is not executed.

17. The carbon dioxide recovery method according to any one of claims 11 to 14, further executing:
a pretreatment that removes moisture contained in the exhaust gas,
wherein the pretreatment includes a dehumidification step of sending the exhaust gas into the dehumidification tower, removing moisture in the exhaust gas, and guiding a dry exhaust gas as the exhaust gas having passed through the dehumidification tower to the adsorption tower,
wherein the non-recovery gas circulation step includes a non-recovery gas discharge step of discharging the non-recovery gas to the atmosphere and a recycle step of mixing the non-recovery gas into the dry exhaust gas, and
wherein in the control step, when the pressure in the adsorption tower is a lower vacuum than the recovery pressure and a lower vacuum than a recycle pressure closer to an atmospheric pressure than the recovery pressure or is assumed to be a lower vacuum than the recycle pressure, the non-recovery gas discharge step is executed and the recycle step is not executed, when the pressure in the adsorption tower is a lower vacuum than the recovery pressure and a higher vacuum than the recycle pressure or is assumed to be a lower vacuum than the recovery pressure and a higher vacuum than the recycle pressure, the non-recovery gas discharge step is not executed and the recycle step is executed, and when the pressure in the adsorption tower is a higher vacuum than the recovery pressure or is assumed to be a high vacuum, the non-recovery gas discharge step and the recycle step are not executed.

18. The carbon dioxide recovery method according to any one of claims 11 to 14, wherein zeolite is used as the carbon dioxide adsorbent.

19. The carbon dioxide recovery method according to claim 18,
wherein the recovery pressure is -75 to -95 kPaG.
